# EUROPEAN PATENT APPLICATION

(11) **EP 4 112 221 A1**
(43) Date of publication of application: **04.01.2023**
(21) Application number: 20921895.7
(22) Date of filing: 25.02.2020
(51) Int. Cl.: B23K 26/34, B23K 26/21, B29C 64/20, B29C 64/264, B29C 64/393, B33Y 30/00

(54) **PROCESSING SYSTEM**

(71) Applicant: NIKON CORPORATION, Minato-ku Tokyo 108-6290 (JP)
(72) Inventor: MATSUDA, Takeshi, Tokyo 108-6290 (JP)
(74) Representative: Hoffmann Eitle
(86) International application number: PCT/JP2020/007493
(87) International publication number: WO 2021/171371

(57) **Abstract**

A processing system includes: a processing apparatus for processing an object; a rotation apparatus for rotating a holding part holding the object; a movement apparatus for moving at least one of the processing apparatus and the holding part; a measurement apparatus for measuring at least a part of the object held by the holding part; and a control apparatus for controlling the movement apparatus and the rotation apparatus based on a measured result by the measurement apparatus to rotate the holding part and to move at least one of the processing apparatus and the holding part

## Description

### Technical Field

The present invention relates to a processing system that is configured to process an object, for example.

### Background Art

A Patent Literature 1 discloses a processing system that is configured to process an object. The technical problem of the processing system is to properly process the object.

### Citation List

### Patent Literature

Patent Literature 1: US2014/0197576A1

### Summary of Invention

A first aspect provides a processing system that is configured to process an object, wherein the processing system includes: a processing apparatus that is configured to process the object; a rotation apparatus that is configured to rotate a holding part that holds the object; a movement apparatus that is configured to move at least one of the processing apparatus and the holding part; a measurement apparatus that is configured to measure at least a part of the object held by the holding part; and a control apparatus that is configured to control the movement apparatus and the rotation apparatus based on a measured result by the measurement apparatus to rotate the holding part and to move at least one of the processing apparatus and the holding part.

A second aspect provides a processing system that is configured to process an object, wherein the processing system includes: a processing apparatus that is configured to process the object by irradiating the object with an energy beam; a movement apparatus that is configured to move at least one of an irradiation position of the energy beam and the object; a rotation apparatus that is configured to rotate a holding part that holds the object; a measurement apparatus that is configured to measure at least a part of the object; and a control apparatus that is configured to control the movement apparatus and the rotation apparatus based on a measured result by the measurement apparatus to rotate the object and to move at least one of the irradiation position and the object.

A third aspect provides a processing system that is configured to process an object, wherein the processing system includes: a processing apparatus that is configured to process the object; a rotation apparatus that is configured to rotate a holding part that holds the object; a movement apparatus that is configured to move at least one of the processing apparatus and the holding part; a measurement apparatus that is configured to measure at least a part of the object held by the holding part; and a control apparatus that is configured to obtain a relationship between the object held by the holding part and a rotational axis of the rotation apparatus based on a measured result by the measurement apparatus.

A fourth aspect provides a processing system that is configured to process an object, wherein the processing system includes: a processing apparatus that is configured to process the object; a holding part that includes: a first surface on which the object is placed; and a second surface that is different from the first surface; and a cooling apparatus that is configured to cool the second surface.

A fifth aspect provides a processing system that is configured to process an object, wherein the processing system comprises: a processing apparatus that is configured to process the object; a holding part that includes: a first surface on which the object is placed; and a second surface that is different from the first surface; and a gas supply apparatus that is configured to supply a gas to a space facing the second surface.

An operation and another advantage of the present invention will be apparent from an example embodiment described below.

### Brief Description of Drawings

[FIG. 1] FIG. 1 is a block diagram that illustrates a system configuration of a processing system in a first example embodiment.
[FIG. 2] FIG. 2 is a cross-sectional view that illustrates a configuration of the processing system in the first example embodiment.
[FIG. 3] FIG. 3 is a cross-sectional view that illustrates a configuration of the processing system in the first example embodiment.
[FIG. 4] Each of FIG. 4A to FIG 4E is a cross-sectional view that illustrates an aspect in which a certain area on a workpiece is irradiated with a processing light and build materials are supplied thereto.
[FIG. 5] Each of FIG. 5A to FIG. 5C is a cross-sectional view that illustrates a process for forming a three-dimensional structural object.
[FIG. 6] FIG. 6 is a flowchart that illustrates a flow of a coordinate matching operation.
[FIG. 7] FIG. 7 is a planar view that illustrates a stage on which a mark for an alignment is formed.
[FIG. 8] FIG. 8 is a VII-VII' cross-sectional view of the stage illustrated in FIG. 7.
[FIG. 9] FIG. 9 is a planar view that illustrates a calibration plate on which a mark for the alignment is formed.
[FIG. 10] FIG. 10 is a IX-IX' cross-sectional view of the calibration plate illustrated in FIG. 9.
[FIG. 11] FIG. 11 is a planar view that illustrates the calibration plate that is placed on the stage.
[FIG. 12] FIG. 12 is a planar view that illustrates the calibration plate that is irradiated with the processing light.
[FIG. 13] FIG. 13 illustrates the workpiece that is supported by the stage so that an eccentric amount that is an amount of a misalignment between a rotational axis of the stage and an ideal rotational axis of the workpiece is zero.

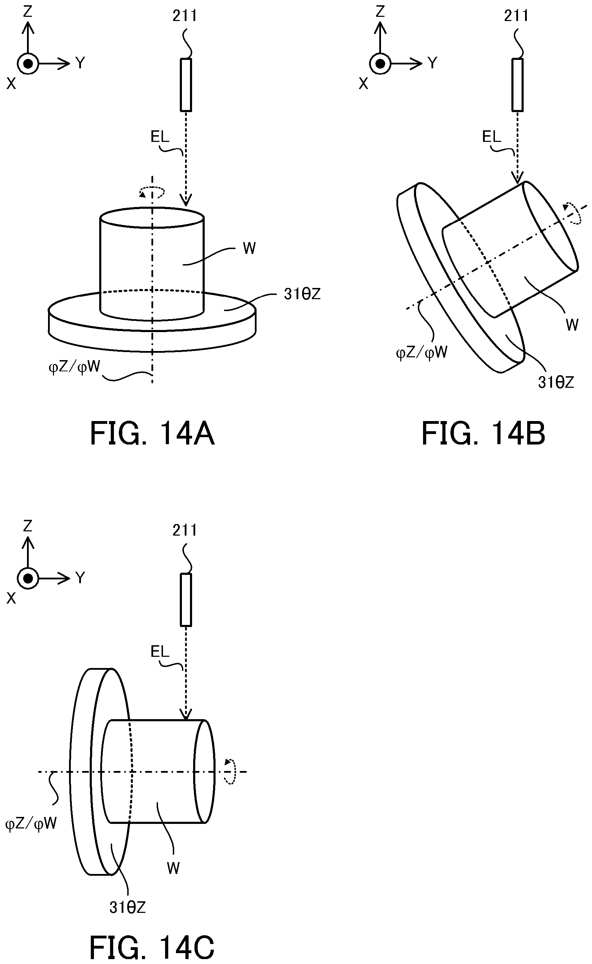

[FIG. 14] FIG. 14A illustrates a moving trajectory of a target irradiation area on the workpiece during a period in which the stage rotates around the rotational axis parallel to a Z axis in a state where the eccentric amount is zero, FIG. 14B illustrates a moving trajectory of the target irradiation area on the workpiece during a period in which the stage rotates around the rotational axis inclined with respect to the Z axis in a state where the eccentric amount is zero, and FIG. 14C illustrates a moving trajectory of the target irradiation area on the workpiece during a period in which the stage rotates around the rotational axis perpendicular to the Z axis in a state where the eccentric amount is zero.
[FIG. 15] FIG. 15 illustrates the workpiece that is supported by the stage so that the eccentric amount that is the amount of the difference between the rotational axis of the stage and the ideal rotational axis of the workpiece is not zero.
[FIG. 16] Each of and FIG. 16B illustrates a relative positional relationship between a processing head and the workpiece supported by the stage that rotates around the rotational axis parallel to the Z axis in a state where the eccentric amount is not zero.
[FIG. 17] Each of FIG. 17A and FIG. 17B illustrates a relative positional relationship between the processing head and the workpiece supported by the stage that rotates around the rotational axis inclined with respect to the Z axis in a state where the eccentric amount is not zero.
[FIG. 18] Each of FIG. 18A and FIG. 18B illustrates a relative positional relationship between the processing head and the workpiece supported by the stage that rotates around the rotational axis perpendicular to the Z axis in a state where the eccentric amount is not zero.
[FIG. 19] FIG. 19 is a block diagram that illustrates an irradiation optical system including a Galvano mirror.
[FIG. 20] FIG. 20 is a flowchart that illustrates a flow of an eccentric amount obtaining operation.
[FIG. 21] FIG. 21 is a flowchart that illustrates a flow of an operation for calculating the rotational axis of the stage at a step S21 in FIG. 20.
[FIG. 22] FIG. 22 is a flowchart that illustrates a flow of an operation for calculating the rotational axis of the workpiece at a step S22 in FIG. 20.
[FIG. 23] FIG. 23 is a block diagram that illustrates a system configuration of a processing system in a second example embodiment.
[FIG. 24] FIG. 24 is a cross-sectional view that illustrates a configuration of the processing system in the second example embodiment.
[FIG. 25] FIG. 25 is a block diagram that illustrates a system configuration of a processing system in a third example embodiment.
[FIG. 26] FIG. 26 is a cross-sectional view that illustrates a configuration of the processing system in the third example embodiment.
[FIG. 27] FIG. 27 is a block diagram that illustrates a system configuration of a processing system in a fourth example embodiment.
[FIG. 28] FIG. 28 is a cross-sectional view that illustrates one example of a configuration of a cooling apparatus in the fourth example embodiment.
[FIG. 29] FIG. 29 is a planar view that illustrates one example of the calibration plate.
[FIG. 30] FIG. 30 is a planar view that illustrates one example of the calibration plate.
[FIG. 31] FIG. 31 is a planar view that illustrates one example of the calibration plate.
[FIG. 32] FIG. 32 is a planar view that illustrates one example of the calibration plate.
[FIG. 33] FIG. 33 is a planar view that illustrates one example of the calibration plate.
[FIG. 34] FIG. 34 is a planar view that illustrates one example of the calibration plate.
[FIG. 35] FIG. 35 is a planar view and a perspective view that illustrate the stage.

### Description of Embodiments

Next, with reference to drawings, a processing system SYS that is one example embodiment of a processing system will be described. In the below described description, a positional relationship of various components that constitute the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially an up-down direction or a gravity direction), for the purpose of simple description, in the below described description. Moreover, rotational directions (in other words, inclination directions) around the X axis, the Y axis and the Z axis are referred to as a θX direction, a θY direction and a θZ direction, respectively. Here, the Z axis direction may be the gravity direction. An XY plane may be a horizontal direction.

### (1) Processing System SYS in First Example Embodiment

Firstly, the processing system SYS in a first example embodiment (in the below described description, the processing system SYS in the first example embodiment is referred to as a "processing system SYSa") will be described. The processing system SYSa in the first example embodiment is a processing system that is configured to form the three-dimensional structural object ST by performing an additive processing. The processing system SYSa is configured to form the three-dimensional structural object ST by performing the additive processing based on a LMD (Laser Metal Deposition), for example. Note that the Laser Metal Deposition may be referred to as a Direct Metal Deposition, a Direct Energy Deposition, a Laser Cladding, a Laser Engineered Net Shaping, a Direct Light Fabrication, a Laser Consolidation, a Shape Deposition Manufacturing, a Wire Feed Laser Deposition, a Gas Through Wire, a Laser Powder Fusion, a Laser Metal Forming, a Selective Laser Powder Re-melting, a Laser Direct Casting, a Laser Powder Deposition, a Laser Additive Manufacturing or a Laser Rapid Forming. However, the processing system SYSa may be configured to form the three-dimensional structural object ST by performing the additive processing based on another additive processing method.

Next, a configuration and operation of the processing system SYSa performing the additive processing will be described in sequence.

### (1-1) Configuration of Processing System SYSa

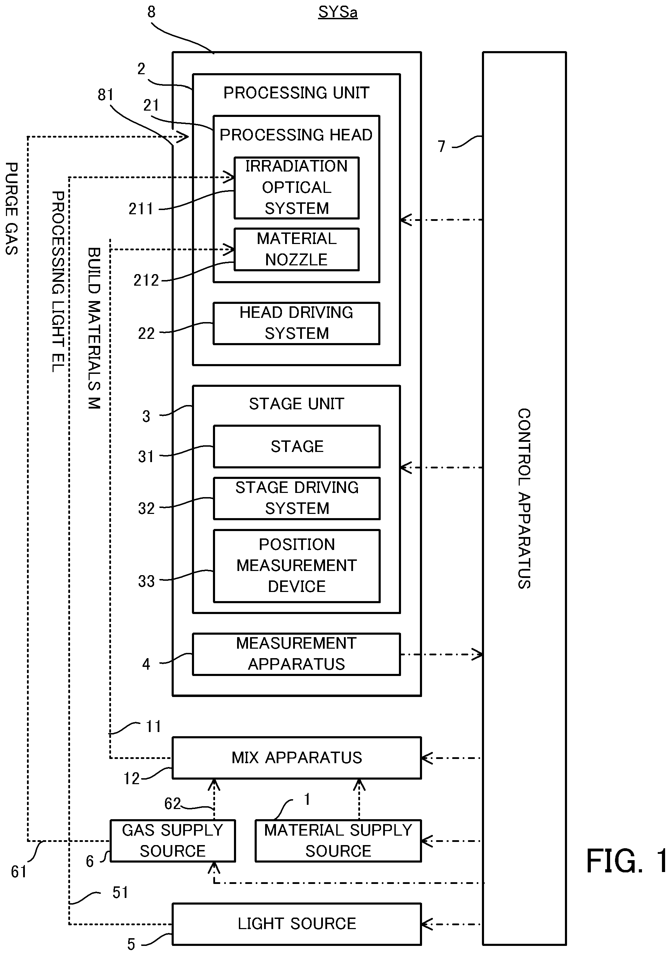

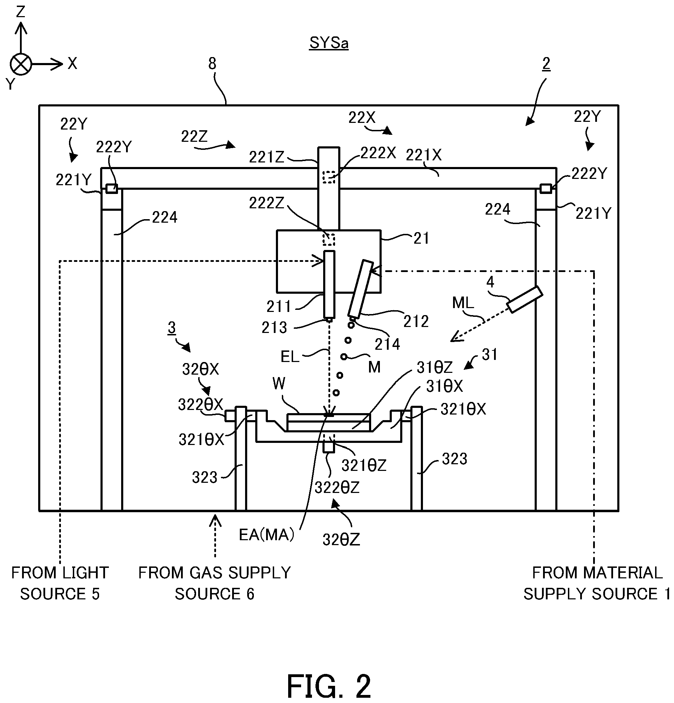

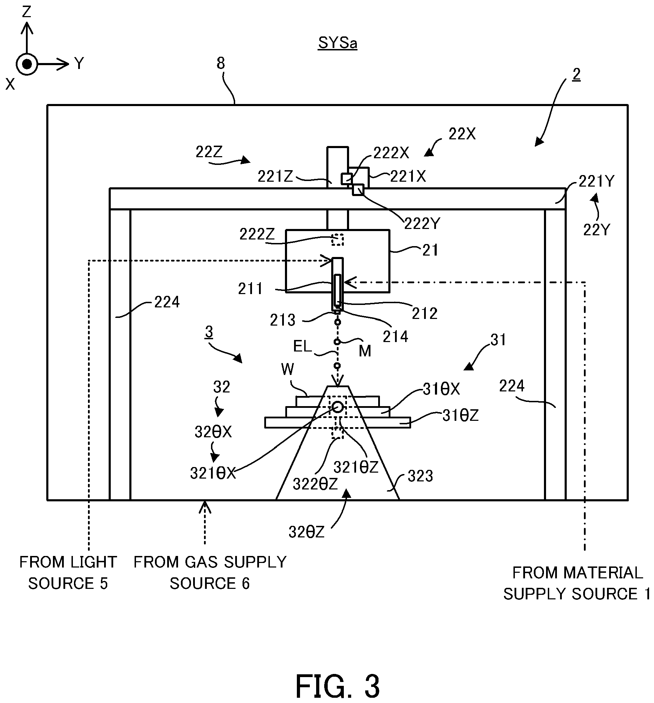

Firstly, with reference to FIG. 1 to FIG. 3, a configuration of the processing system SYSa in the first example embodiment will be described. FIG. 1 is a system configuration diagram that illustrates a system configuration of the processing system SYSa. Each of FIG. 2 and FIG. 3 is a cross-sectional view that conceptionally illustrates the configuration of the processing system SYSa in the first example embodiment.

The processing system SYSa is configured to form the three-dimensional structural object ST (namely, a three-dimensional object having a size in each of three-dimensional directions, a solid object, in other words, an object having a size in the X axis direction, the Y axis direction and the Z axis direction). The processing system SYSa is configured to form the three-dimensional structural object ST on a workpiece W that is a base (namely, a base member) for forming the three-dimensional structural object ST. The processing system SYSa is configured to form the three-dimensional structural object ST on the workpiece W by performing the additive processing on the workpiece W. When the workpiece W is a below described stage 31, the processing system SYSa may be configured to form the three-dimensional structural object ST on the stage 31. When the workpiece W is a placed object that is placed on the stage 31, the processing system SYSa may be configured to form the three-dimensional structural object ST on the placed object. In this case, the processing system SYSa may form the three-dimensional structural object ST that is integrated with the placed object. An operation for forming the three-dimensional structural object ST that is integrated with the placed object may be regarded to be equivalent to an operation for adding a new structural object to the placed object. Alternatively, the processing system SYSa may form the three-dimensional structural object ST that is separable from the placed object. The placed object that is placed on the stage 31 may be another three-dimensional structural object ST (namely, an existing structural object) that is formed by the processing system SYSa. The below described description uses the example in which the workpiece W is the placed object placed on the stage 31.

As described above, the processing system SYSa is configured to form the three-dimensional structural object ST by the Laser Metal Deposition. Namely, it can be said that the processing system SYSa is a 3D printer that forms an object by using an Additive layer manufacturing technique. Note that the Additive layer manufacturing technique may be referred to as a Rapid Prototyping, a Rapid Manufacturing or an Additive Manufacturing.

The processing system SYSa forms a build object by processing build materials M by a processing light EL. The build material M is a material that is molten by an irradiation of the processing light EL having a predetermined intensity or more intensity. At least one of a metal material and a resin material is usable as the build material M, for example. However, another material that is different from the metal material and the resin material may be used as the build material M. The build materials M are powder-like or grain-like materials. Namely, the build materials M are powdery and granular materials. However, the build materials M may not be the powdery and granular materials. For example, wired-like build materials or gas-like build materials may be used as the build materials M.

In order to form the three-dimensional structural object ST, the processing system SYSa includes a material supply source 1, a processing unit 2, a stage unit 3, a measurement apparatus, a light source 5, a gas supply source 6 and a control apparatus 7, as illustrated in FIG. 1 to FIG. 3. At least a part of the processing unit 2, the stage unit 3 and the measurement apparatus 4 may be contained in an inner space of a housing 8.

The material supply source 1 is configured to supply the build materials M to the processing unit 2. The material supply source 1 supplies, to the processing unit 2, the build materials M the amount of which is necessary for forming the three-dimensional structural object ST per unit time by supplying the build materials M the amount of which is based on the necessary amount.

The processing unit 2 is configured to form the three-dimensional structural object ST by processing the build materials M supplied from the material supply source 1. In order to form the three-dimensional structural object ST, the processing unit 2 includes a processing head 21 and a head driving system 22. Moreover, the processing head 21 includes an irradiation optical system 211 and a material nozzle 212 (namely, a supply system that is configured to supply the build materials M). Note that the processing head 21 may be referred to as a processing apparatus.

The irradiation optical system 211 is an optical system (for example, a condensing optical system) for emitting the processing light EL from an emitting part 213. Specifically, the irradiation optical system 211 is optically connected to the light source 5 that generates the processing light EL through a light transmitting member 51 such as an optical fiber and light pipe. The irradiation optical system 211 emits the processing light EL transmitted from the light source 5 through the light transmitting member 51. The irradiation optical system 211 emits the processing light EL in a downward direction (namely, toward a -Z side) from the irradiation optical system 211. The stage 31 is disposed below the irradiation optical system 211. When the workpiece W is placed on the stage 31, the irradiation optical system 211 emits the processing light EL toward the workpiece W. Thus, the irradiation optical system 211 may be referred to as an irradiation apparatus. Specifically, the irradiation optical system 211 is configured to irradiate a target irradiation area EA, which is set on the workpiece W or near the workpiece W as an area that is irradiated with the processing light EL (typically, in which the light is condensed), with the processing light EL. Moreover, a state of the irradiation optical system 211 is switchable between a state where the target irradiation area EA is irradiated with the processing light EL and a state where the target irradiation area EA is not irradiated with the processing light EL under the control of the control apparatus 7. Note that a direction of the processing light EL emitted from the irradiation optical system 211 is not limited to a direct downward direction (namely, coincident with the -Z axis direction), and may be a direction that is inclined with respect to the Z axis by a predetermined angle, for example.

A supply outlet is formed at the material nozzle 212. The material nozzle 212 is configured to supply (specifically, inject, jet, blow out or spray) the build materials M from the supply outlet 214. The material nozzle 212 is physically connected to the material supply source 1, which is a supply source of the build materials M, through a supply pipe 11 and a mix apparatus 12. The material nozzle 212 supplies the build materials M supplied from the material supply source 1 through the supply pipe 11 and the mix apparatus 12. The material nozzle 212 may pressure-feed the build materials M supplied from the material supply source 1 through the supply pipe 11. Namely, the build materials M from the material supply source 1 and a gas for feeding (namely, a pressure-feed gas, and an inert gas such as a Nitrogen or an Argon, for example) may be mixed by the mix apparatus 12 and then pressure-fed to the material nozzle 212 through the supply pipe 11. As a result, the material nozzle 212 supplies the build materials M together with the gas for feeding. A purge gas supplied from the gas supply source 6 is used as the gas for feeding, for example. However, a gas supplied from a gas supply apparatus that is different from the gas supply source 6 may be used as the gas for feeding. Note that the material nozzle 212 is illustrated to have a tube-like shape in FIG. 1, however, a shape of the material nozzle 212 is not limited to this shape. The material nozzle 212 supplies the build materials M in a downward direction (namely, toward the -Z side) from the material nozzle 212. The stage 31 is disposed below the material nozzle 212. When the workpiece W is placed on the stage 31, the material nozzle 212 supplies the build materials M toward the workpiece W or a vicinity of the workpiece W. Note that a supply direction of the build materials M supplied from the material nozzle 212 is a direction that is inclined with respect to the Z axis by a predetermined angle (as one example, an acute angle), however, it may be the -Z axis direction (namely, a direct downward direction).

In the present example embodiment, the material nozzle 212 is aligned to the irradiation optical system 211 so as to supply the build materials M to the target irradiation area EA that is irradiated with the processing light EL by the irradiation optical system 211. Namely, the material nozzle 212 is aligned to the irradiation optical system 211 so that the target irradiation area EA is coincident with (alternatively, at least partially overlaps with) a target supply area MA that is set on the workpiece W or near the workpiece W as an area to which the material nozzle 212 supplies the build materials M. Note that the material nozzle 212 may be aligned to the irradiation optical system 211 so that the material nozzle 212 supplies the build materials M to a melt pool MP (described below) that is formed by the processing light EL emitted from the irradiation optical system 211. Note that the material nozzle 212 may not supply the materials to the melt pool MP For example, the processing system SYSa may melt the build materials by the irradiation optical system 211 before the build materials M from the material nozzle 212 reaches the workpiece W, and may make the molten build materials M adhere to the workpiece W.

The head driving system 22 is configured to move the processing head 21. Thus, the head driving system 22 may be referred to as a movement apparatus. The head driving system 22 moves the processing head 21 along at least one of the X axis, the Y axis, the Z axis, the θX direction, the θY direction and the θZ direction, for example. In an example illustrated in FIG. 2 and FIG. 3, the head driving system 22 moves the processing head 21 along each of the X axis, the Y axis and the Z axis. In this case, the head driving system 22 may include a head driving system 22X, a head driving system 22Y and a head driving system 22Z. The head driving system 22X is configured to move the processing head 21 along the X axis. The head driving system 22Y is configured to move the processing head 21 along the Y axis. The head driving system 22Z is configured to move the processing head 21 along the Z axis

The head driving system 22X includes: a Y guide member 221Y that is connected to a support frame 224, which is disposed on a bottom surface of the housing 8 (alternatively, a surface plate disposed on the bottom surface of the housing 8) through a vibration isolator such as an air spring, and that extends along the Y axis; a Y slide member 222Y that is movable along the Y guide member 221Y; and a non-illustrated motor that moves the Y slide member 222Y The head driving system 22Y includes: a X guide member 221X that is connected to the Y slide member 222Y and that extends along the X axis; a X slide member 222X that is movable along the X guide member 221X; and a non-illustrated motor that moves the Y slide member 222X. The head driving system 22Z includes: a Z guide member 221Z that is connected to the X slide member 222X and that extends along the Z axis; a Z slide member 222Z that is movable along the Z guide member 221Z; and a non-illustrated motor that moves the Z slide member 222Z. the processing head 21 is connected to the Z slide member 222Z. When the Y slide member 222Y moves along the Y guide member 221Y, the processing head 21 that is connected to the Y slide member 222Y through the head driving systems 22X and 22Z moves along the Y axis. When the X slide member 222X moves along the X guide member 221X, the processing head 21 that is connected to the X slide member 222X through the head driving system 22Z moves along the X axis. When the Z slide member 222Z moves along the Z guide member 221Z, the processing head 21 that is connected to the Z slide member 222Z moves along the Z axis.

When the head driving system 22 moves the processing head 21, a relative position between the processing head 21 and each of the stage 31 and the workpiece W placed on the stage 31 changes. Namely, a relative position between each of the irradiation optical system 211 and the material nozzle 212 (the supply outlet 214) and each of the stage 31 and the workpiece W changes. Thus, the head driving system 22 may serve as a position change apparatus that is configured to change the relative positional relationship between each of the irradiation optical system 211 and the material nozzle 212 (the supply outlet 214) and each of the stage 31 and the workpiece W. Furthermore, when the relative position between the processing head 21 and each of the stage 31 and the workpiece W changes, the target irradiation area EA and the target supply area MA (furthermore, the melt pool MP) relatively moves relative to the workpiece W. Thus, the head driving system 22 may serve as a movement apparatus that is configured to relatively move the target irradiation area EA and the target supply area MA (furthermore, the melt pool MP) relative to the workpiece W.

The stage unit 3 includes the stage 31, a stage driving system 32 and a position measurement device 33. Note that the stage 31 may be referred to as a table.

The stage 31 is configured to support the workpiece W. Note that a state where "the stage 31 supports the workpiece W" here may mean a state where the workpiece W is directly or indirectly supported by the stage 31. The stage 31 may be configured to hold the workpiece W placed on the stage 31. Namely, the stage 31 may support the workpiece W by holding the workpiece W. thus, the stage 31 may serve as a holding part that holds the workpiece W. Alternatively, the stage 31 may not be configured to hold the workpiece W. In this case, the workpiece W may be placed on the stage 31 without a clamp. Furthermore, the stage 31 may be configured to release the held workpiece W, when the workpiece W is held. The above described irradiation optical system 211 emits the processing light EL in at least a part of a period when the stage 31 supports the workpiece W. Furthermore, the above described material nozzle 212 supplies the build materials M in at least a part of the period when the stage 31 supports the workpiece W. Note that the stage 31 may include a mechanical chuck, a vacuum chuck and the like in order to hold the workpiece W.

In the present example embodiment, the stage 31 includes a stage 31θX and a stage 31θZ. A reason why the stage 31 includes the stage 31θX and the stage 31θZ to move the stage 31 along each of the θX direction and the θZ direction by the below described stage driving system 32, as described later in detail. The workpiece W is supported by the stage 31θZ. The stage 31θX is movable along the θX direction (namely, rotatable around a rotational axis along the X axis) by the stage driving system 32 described later. The stage 31θZ is disposed in a concave part formed at the stage 31θX so as to rotatable around the rotational axis along the X axis together with the stage 31θX due to the rotation of the stage 31θX. The stage 31θZ is disposed in the concave part formed at the stage 31θX so as to movable along the θZ direction (namely, rotatable around a rotational axis along the Z axis) by the stage driving system 32 independently from the rotation of the stage 31θX. Note that a configuration of the stage 31 is not limited to a configuration illustrated in FIG. 2 and FIG. 3. As one example, the stage 31θZ may not be disposed in the concave part formed at the stage 31θX.

The stage driving system 32 is configured to move the stage 31. Thus, the stage driving system 32 may be referred to as a movement apparatus. The stage driving system 32 moves the stage 31 along at least one of the X axis, the Y axis, the Z axis, the θX direction, the θY direction and the θZ direction, for example. In the example illustrated in FIG. 2 and FIG. 3, the stage driving system 32 moves the stage 31 along each of the θX direction and the θZ direction. Namely, the stage driving system 32 rotates the stage 31 around the rotational axis along the X axis and rotates the stage 31 around the rotational axis along the Z axis. Thus, the stage driving system 32 may be referred to as a rotation apparatus. In this case, the stage driving system 32 may include a stage driving system 32θX and a stage driving system 32θZ. The stage driving system 32θX is configured to rotate the stage 31 (especially, the stage 31θX) around the rotational axis along the X axis. The stage driving system 32θZ is configured to rotate the stage 31 (especially, the stage 31θZ) around the rotational axis along the Z axis. The stage driving system 32θX includes a pair of rotational shafts 321θX that is rotatably connected to a pair of support frames 323, which is disposed on the bottom surface of the housing 8 (alternatively, the surface plate disposed on the bottom surface of the housing 8) through a vibration isolator such as an air spring; and a motor 322θX that rotates the pair of the rotational shafts 321θX around the rotational axis along the X axis. The pair of the rotational shafts 321θX extends along the X axis direction. The pair of the rotational shafts 321θX is connected to the stage 31θX so that the stage 31 is between them along the X axis direction. The stage driving system 32θZ includes a rotational shaft 321θZ that extends along the Z axis direction and that is connected to a bottom surface of the stage 31θX (specifically, a surface facing the stage 31θZ); and a motor 322θZ that rotates the rotational shaft 321θZ around the rotational axis along the Z axis. When the pair of the rotational shafts 321θX rotates, the stage 31θX rotates around a rotational axis along the X axis. As a result, the stage 31θZ supported by the stage 31θX (furthermore, the workpiece W supported by the stage 31θZ) also rotates around the rotational axis along the X axis. When the rotational shafts 321θZ rotates, the stage 31θZ (furthermore, the workpiece W supported by the stage 31θZ) also rotates around a rotational axis along the Z axis. Note that the stage 31 illustrated in FIG. 2 and FIG. 3 has a double-sided structure in which stage 31θX is supported from both sides by support frame 323. The stage 31 has a double-sided structure in which the stage 31θX is supported from both sides by the support frame 323. However, the stage 31 may have a cantilever structure in which the stage 31θX is supported from one side by the support frame 323.

When the stage driving system 32 moves the stage 31, the relative position between the processing head 21 and each of the stage 31 and the workpiece W placed on the stage 31 changes. Namely, the relative position between each of the irradiation optical system 211 and the material nozzle 212 (the supply outlet 214) and each of the stage 31 and the workpiece W changes. Thus, the stage driving system 32 may serve as a position change apparatus that is configured to change the relative positional relationship between each of the irradiation optical system 211 and the material nozzle 212 (the supply outlet 214) and each of the stage 31 and the workpiece W. Furthermore, when the relative position between the processing head 21 and each of the stage 31 and the workpiece W changes, the target irradiation area EA and the target supply area MA (furthermore, the melt pool MP) relatively moves relative to the workpiece W. Thus, the stage driving system 32 may serve as a movement apparatus that is configured to relatively move the target irradiation area EA and the target supply area MA (furthermore, the melt pool MP) relative to the workpiece W.

The position measurement device 33 is configured to measure (in other words, is configured to detect) a position of the stage 31. In the present example embodiment, since the stage 31 is rotatable as described above, the position measurement device 33 may be configured to measure the position of the stage 31 in a rotational direction. For example, the position measurement device 33 may include an angle detection apparatus (an angle detection part) that is configured to measure a rotational angle of the stage 31. More specifically, the position measurement device 33 may be configured to measure a rotational angle of the stage 31 (especially, the stage 31θX) around the rotational axis along the X axis and a rotational angle of the stage 31 (especially, the stage 31θZ) around the rotational axis along the Z axis. An encoder is one example of the position measurement device 33. Note that the position measurement device 33 may be embedded to the stage driving system 32.

The measurement apparatus 4 is an apparatus that is configured to measure at least a part of a measurement target object. For example, the measurement apparatus 4 may be configured to measure a shape of at least a part of the measurement target object. For example, the measurement apparatus 4 may be configured to measure a position of at least a part of the measurement target object. A three-dimensional measurement device (in other words, a 3D scanner) is one example of the measurement apparatus. In this case, the measurement apparatus 4 may measure the measurement target object by using a Pattern Projection method or a Light Section method that irradiates a surface of the measurement target object with a measurement light ML to project a light pattern on the surface and measures a shape of the projected pattern. Alternatively, the measurement apparatus 4 may measure the measurement target object by using a Time Of Flight method that performs an operation, which emits a measurement light ML to the surface of the measurement target object and measures a distance to the object based on an elapsed time until the emitted measurement light ML returns, at plurality of positions on the object. Alternatively, he measurement apparatus 4 may measure the measurement target object by using at least one of a Moire Topography method (specifically, a grid illumination method or a grid projection method), a Holographic Interference method, an auto collimation method, a stereo method, an astigmatism method, a critical angle method and a knife edge method. Note that at least one of the workpiece W, the three-dimensional structural object ST (namely, the workpiece W integrated with the three-dimensional structural object ST), a below described structural layer SL forming the three-dimensional structural object ST (namely, the workpiece W integrated with the three-dimensional structural object ST) and the stage 31 is one example of the measurement target object.

The measurement apparatus 4 may be fixed to the support frame 224. In this case, when the stage driving system 32 rotates the stage 31, a relative positional relationship between the measurement apparatus 4 and each of the stage 31 and the workpiece W supported by the stage 31 changes. Especially, when the stage driving system 32 rotates the stage 31, an angle between a measurement axis of the measurement apparatus 4 (for example, an optical axis of an optical system that is included in the measurement apparatus 4 to emit the measurement light ML) and the rotational axis of the stage 31 and the workpiece W supported by the stage 31 (namely, the rotational axis of the stage driving system 32) changes. Therefore, the measurement apparatus 4 may serve as an angle change apparatus that is configured to change the angle between the measurement axis of the measurement apparatus 4 and the rotational axis of the stage driving system 32. Note that the measurement apparatus 4 may be movable. For example, the measurement apparatus 4 may be movable along at least one of the X axis, the Y axis, the Z axis, the θX direction, the θY direction and the θZ direction. For example, the measurement apparatus 4 may be rotatable around at least one of a rotational axis along the X axis, a rotational axis along the Y axis and a rotational axis along the Z axis. When the measurement apparatus 4 is rotated, the angle between the measurement axis of the measurement apparatus 4 and the rotational axis of the stage driving system 32 changes. Note that the measurement apparatus 4 may be fixed to the housing 8.

The light source 5 is configured to emit at least one of an infrared light, a visible light and an ultraviolet light as the processing light EL, for example. However, another type of light may be used as the processing light EL. The processing light EL may include plurality of pulsed lights (namely, a plurality of pulsed beam). The processing light EL may be a laser light. In this case, the light source 5 may include a semiconductor laser such as a laser light source (for example, a Laser Diode (LD)). The laser light source may be a fiber laser, a CO₂ laser, a YAG laser, an Excimer laser and the like. However, the processing light EL may not be the laser light. The light source 5 may include any light source (for example, at least one of a LED (Light Emitting Diode), a discharge lamp and the like).

The gas supply source 6 is a supply source of a purge gas for purging the inner space of the housing 8. The purge gas includes inert gas. The Nitrogen gas or Argon gas is one example of the inert gas. The gas supply source 6 supplies the purge gas to the inner space of the housing through supply pipe 61 that connects the gas supply source 6 and the housing 8. As a result, the inner space of the housing 8 is a space that is purged by the purge gas. Note that the gas supply source 6 may be a tank that stores the inert gas such as the Nitrogen gas or the Argon gas. When the purge gas is the Nitrogen gas, the gas supply source 6 may be a Nitrogen gas generation apparatus that generates the Nitrogen gas by using air as material.

When the material nozzle 212 supplies the build materials M together with the purge gas as described above, the gas supply source 6 may supply the purge gas to the mix apparatus 12 to which the build materials M are supplied from the material supply source 1. Specifically, the gas supply source 6 may be connected to the mix apparatus 12 through a supply pipe 62 that connects the gas supply source 6 and the mix apparatus 12. As a result, the gas supply source 6 supplies the purge gas to the mix apparatus 12 through the supply pipe 62. In this case, the build materials M from the material supply source 1 may be supplied (specifically, pressure-fed) to the material nozzle 212 through the supply pipe 11 by the purge gas supplied from the gas supply source 6 through the supply pipe 62. Namely, the gas supply source 6 may be connected to the material nozzle 212 through the supply pipe 62, the mix apparatus 12 and the supply pipe 11. In this case, the material nozzle 212 supplies, from the supply outlet 214, the build materials M together with the purge gas for pressure-feeding the build materials M.

The control apparatus 7 is configured to control an operation of the processing system SYSa. The control apparatus 7 may include an arithmetic apparatus and a storage apparatus. The arithmetic apparatus may include at least one of a CPU (Central Processing Unit) and a GPU (Graphic Processing Unit), for example. The storage apparatus may include a memory. The control apparatus 7 serves as an apparatus for controlling the operation of the processing system SYSa by means of the arithmetic apparatus executing a computer program. The computer program is a computer program that allows the arithmetic apparatus to execute (namely, to perform) a below described operation that should be executed by the control apparatus 7. Namely, the computer program is a computer program that allows the control apparatus 7 to function so as to make the processing system SYSa execute the below described operation. The computer program executed by the arithmetic apparatus may be recorded in the storage apparatus (namely, a recording medium) of the control apparatus 7, or may be recorded in any recording medium (for example, a hard disk or a semiconductor memory) that is built in the control apparatus 7 or that is attachable to the control apparatus 7. Alternatively, the arithmetic apparatus may download the computer program that should be executed from an apparatus disposed at the outside of the control apparatus 7 through a network interface.

For example, the control apparatus 7 may control an emitting aspect of the processing light EL by the irradiation optical system 211. The emitting aspect may include at least one of an intensity of the processing light EL and an emitting timing of the processing light EL, for example. When the processing light EL includes the plurality of pulse lights, the emitting aspect may include at least one of an ON time of the pulsed light, an emission cycle of the pulsed light and a ratio (what we call a duty ratio) of a length of the ON time of the pulsed light and the emission cycle of the pulsed light, for example. Moreover, the control apparatus 7 may control a moving aspect of the processing head 21 by the head driving system 22. The control apparatus 7 may control a moving aspect of the stage 31 by the stage driving system 32. The moving aspect may include at least one of a moving distance, a moving speed, a moving direction and a moving timing (a moving period), for example. Moreover, the control apparatus 7 may control a supply aspect of the build materials M by the material nozzle 212. The supply aspect may include at least one of the supplied amount (especially, the supplied amount per unit time) and a supply timing (a supply period).

The control apparatus 7 may not be disposed in the processing system SYSa. For example, the control apparatus 7 may be disposed at the outside of the processing system SYSa as a server or the like. In this case, the control apparatus 7 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 7 and the processing system SYSa may be configured to transmit and receive various information through the network. Moreover, the control apparatus 7 may be configured to transmit an information such as a command and a control parameter to the processing system SYSa through the network. The processing system SYSa may include a reception apparatus that is configured to receive the information such as the command and the control parameter from the control apparatus 7 through the network. The processing system SYSa may include a transmission apparatus that is configured to transmit the information such as the command and the control parameter to the control apparatus 7 through the network (namely, an output apparatus that is configured to output an information to the control apparatus 7). Alternatively, a first control apparatus that is configured to perform a part of the arithmetic processing performed by the control apparatus 7 may be disposed in the processing system SYSa and a second control apparatus that is configured to perform another part of the arithmetic processing performed by the control apparatus 7 may be disposed at an outside of the processing system SYSa

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the control apparatus 7 may include. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 7 by means of the control apparatus 7 (namely, a computer) executing the computer program, may be realized by a hardware such as a predetermined gate array (a FPGA, an ASIC) of the control apparatus 7, or may be realized in a form in which the logical process block and a partial hardware module that realizes an partial element of the hardware are combined.

### (1-2) Operation of Processing System SYSa

Next, an operation of the processing system SYSa will be described. In the first example embodiment, the processing system SYSa performs an additive processing operation for forming the three-dimensional structural object ST on the workpiece W. Furthermore, the processing system SYSa performs, before performing the additive processing operation (alternatively, while performing the additive processing operation or after performing the additive processing operation), a coordinate matching operation for associating a processing coordinate system that is used when the head driving system 22 moves the processing head 21 with a stage coordinate system that is used when the stage driving system 32 moves the stage 31. Furthermore, the processing system SYSa performs, before performing the additive processing operation (alternatively, while performing the additive processing operation or after performing the additive processing operation), an eccentric amount obtaining operation for obtaining an amount of a misalignment (typically, an eccentric amount δ) between the rotational axis of the stage 31 (namely, the rotational axis of the stage driving system 32 that serves as the rotation apparatus) and an ideal rotational axis of the workpiece W supported by the stage 31. Thus, in the below described description, the additive processing operation, the coordinate matching operation and the eccentric amount obtaining operation will be described in sequence.

### (1-2-1) Additive Processing Operation

Firstly, the additive processing operation will be described. As described above, the processing system SYSa forms the three-dimensional structural object ST by the Laser Metal Deposition. Thus, the processing system SYSa may form the three-dimensional structural object ST by performing an existing additive processing operation (a build operation in this case) based on the Laser Metal Deposition. Next, one example of the additive processing operation of forming the three-dimensional structural object ST by using the Laser Metal Deposition will be briefly described.

The processing system SYSa forms the three-dimensional structural object ST on the workpiece W based on a three-dimensional model data or the like (for example, a CAD (Computer Aided Design) data) of the three-dimensional structural object ST that should be formed. A measured data of the solid object measured by at least one of a non-illustrated measurement apparatus disposed in the processing system SYSa and a three-dimensional shape measurement device disposed separately from the processing system SYS may be used as the three-dimensional model data. The processing system SYSa sequentially forms a plurality of layered partial structural objects (it is referred to as the "structural layer" in the below described description) SL that are arranged along the Z axis direction in order to form the three-dimensional structural object ST, for example. For example, the processing system SYSa forms, one by one, the plurality of structural layers SL that are obtained by slicing the three-dimensional structural object ST along the Z axis direction. As a result, the three-dimensional structural object ST that is a layered structural body in which the plurality of structural layers SL are layered is formed. Next, a flow of an operation for forming the three-dimensional structural object ST by forming the plurality of structural layers SL one by one in sequence will be described.

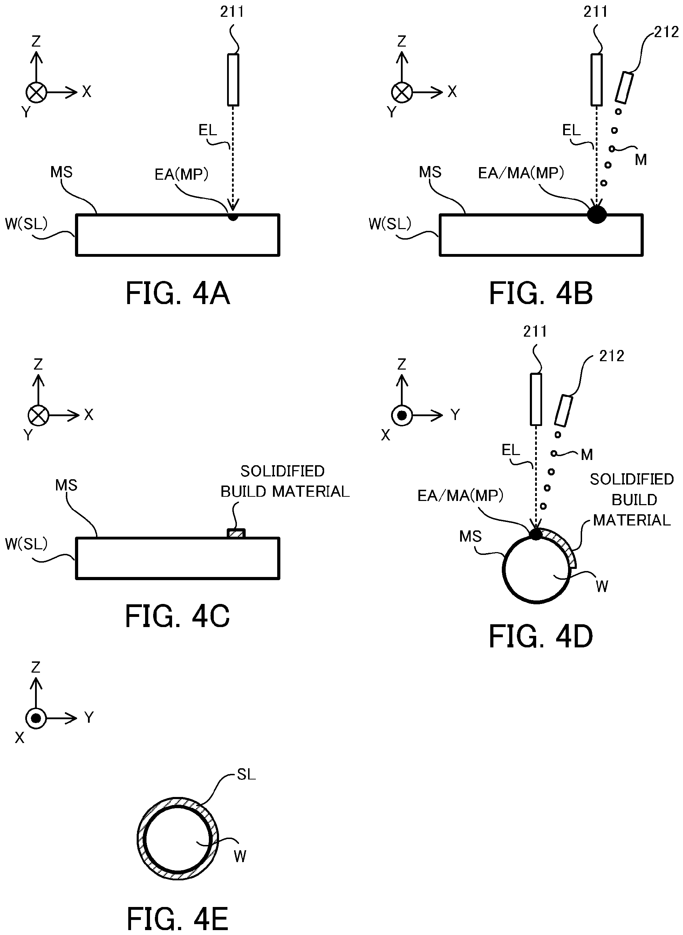

Firstly, with reference to FIG. 4A to FIG. 4E, an operation for forming each structural layer SL will be described. The processing system SYSa moves at least one of the processing head 21 and the stage 31 so that the target irradiation area EA is set at a desired area on a build surface MS that corresponds to a surface of the workpiece W or a surface of the formed structural layer SL, under the control of the control apparatus 7. The processing system SYSa uses results of the coordinate matching operation and the eccentric amount obtaining operation in moving at least one of the processing head 21 and the stage 31. Namely, the processing system SYSa moves at least one of the processing head 21 and the stage 31 based on the results of the coordinate matching operation and the eccentric amount obtaining operation so that the target irradiation area EA is set at the desired area on the build surface MS. Then, the processing system SYSa emits the processing light EL from the irradiation optical system 211 to the target irradiation area EA. In this case, a light concentration position (namely, a condensed position) of the processing light EL may be located on the build surface MS. As a result, as illustrated in FIG. 4A, the melt pool (namely, a pool of a metal molten by the processing light EL) MP is formed on the build surface MS that is irradiated with the processing light EL. Moreover, the processing system SYSa supplies the build materials M from the material nozzle 212 under the control of the control apparatus 7. Here, since the target irradiation area EA is coincident with the target supply area MA to which the build materials M are supplied as described above, the target supply area MA includes at least a part of an area at which the melt pool MP is formed. Thus, the processing system SYSa supplies the build materials M to the melt pool MP from the material nozzle 212, as illustrated in FIG. 4B. As a result, the build materials M supplied to the melt pool MP are molten. Then, when the melt pool MP is not irradiated with the processing light EL due to the movement of the processing head 21, the build materials M molten in the melt pool MP are cooled and solidified (namely, coagulated). As a result, as illustrated in FIG. 4C, the solidified build materials M are deposited on the build surface MS. Namely, a build object is formed by a deposition of the solidified build materials M.

The processing system SYSa repeats a series of build process including the formation of the melt pool MP by the irradiation of the processing light EL, the supply of the build materials M to the melt pool MP, the melting of the supplied build materials M and the solidification of the molten build materials M while changing the relative positional relationship between the processing head 21 and the workpiece W (namely, a relative positional relationship between the processing head 21 and the build surface MS), as illustrated in FIG. 4D. In an example illustrated in FIG. 4D, a series of build process is repeated while rotating the cylindrical workpiece W having a longitudinal direction along the X axis direction around the rotational axis along the X axis direction. In this case, the processing system SYSa irradiates an area on the build surface MS on which the build object should be formed with the processing light EL and does not irradiate an area on the build surface MS on which the build object should not be formed with the processing light EL. Namely, the processing system SYSa moves the target irradiation area EA along a predetermined moving trajectory on the build surface MS and irradiates the build surface MS with the processing light EL at a timing based on an aspect of a distribution of the area on which the build object should be formed. As a result, the melt pool MP also moves on the build surface MS along a moving trajectory based on the moving trajectory of the target irradiation area EA. Specifically, the melt pool MP is formed in series at a part that is irradiated with the processing light EL in the area along the moving trajectory of the target irradiation area EA on the build surface MS. Moreover, since the target irradiation area EA is coincident with the target supply area MA as described above, the target supply area MA also moves on the build surface MS along a moving trajectory based on the moving trajectory of the target irradiation area EA. As a result, as illustrated in FIG. 4E, the structural layer SL that is an aggregation of the build object of the build materials M, which are solidified after being molten, is formed on the build surface MS. Namely, the structural layer SL that is an aggregation of the build object formed in a pattern based on the moving trajectory of the melt pool MP on the build surface MS (namely, the structural layer SL having a shape based on the moving trajectory of the melt pool MP in a planar view) is formed. Incidentally, when the target irradiation area EA is set at the area on which the build object should not be formed, the processing system SYSa may irradiate the target irradiation area EA with the processing light EL and stop the supply of the build materials M. Moreover, when the target irradiation area EA is set at the area on which the build object should not be formed, the processing system SYSa may supply the build materials M to the target irradiation area EA and irradiate the target irradiation area EA with the processing light EL having an intensity by which the melt pool MP is not formed.

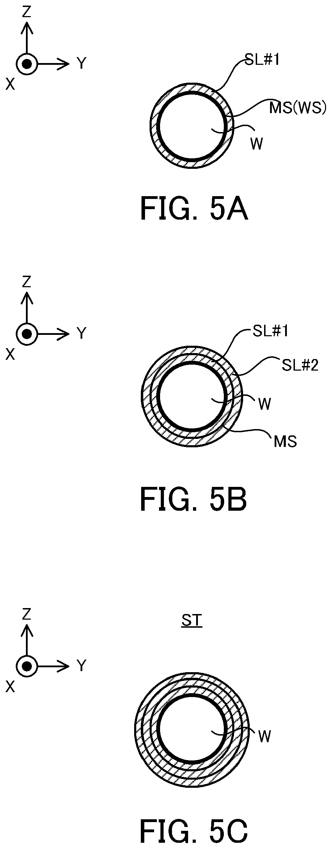

The processing system SYSa repeats the operation for forming the structural layer SL based on the three-dimensional model data under the control of the control apparatus 7. Specifically, the control apparatus 7 firstly generates slice data by performing a slicing process on the three-dimensional model data by a layer pitch. Note that data obtained by modifying a part of the slice data based on a characteristic of the processing system SYSa may be used. The processing system SYSa performs an operation for forming a first structural layer SL#1 on the build surface MS that corresponds to the surface of the workpiece W based on the three-dimensional model data corresponding to the structural layer SL#1 (namely, the slice data corresponding to the structural layer SL#1). As a result, as illustrated in FIG. 5A, the structural layer SL#1 is formed on the build surface MS. Then, the processing system SYSa sets the surface (namely, an upper surface) of the structural layer SL#1 to be a new build surface MS and forms a second structural layer SL#2 on the new build surface MS. In order to form the structural layer SL#2, firstly, the control apparatus 7 moves at least one of the processing head 21 and the stage 31 so that the target irradiation area EA and the target supply area MA are set on the surface of the structural layer SL#1 (namely, the new build surface MS). By this, the light concentration position of the processing light EL is on the new build surface MS. Then, the processing system SYSa performs an operation for forming the structural layer SL#2 on the structural layer SL#1 based on the slice data corresponding to the structural layer SL#2, as with the operation for forming the structural layer SL#1 under the control of the control apparatus 7. As a result, as illustrated in FIG. 5B, the structural layer SL#2 is formed. Then, the same operation is repeated until all structural layers SL constituting the three-dimensional structural object ST that should be formed on the workpiece W are formed. As a result, the three-dimensional structural object ST is formed by a layered structural object in which the plurality of structural layers SL are layered, as illustrated in FIG. 5C.

### (1-2-2) Coordinate Matching Operation

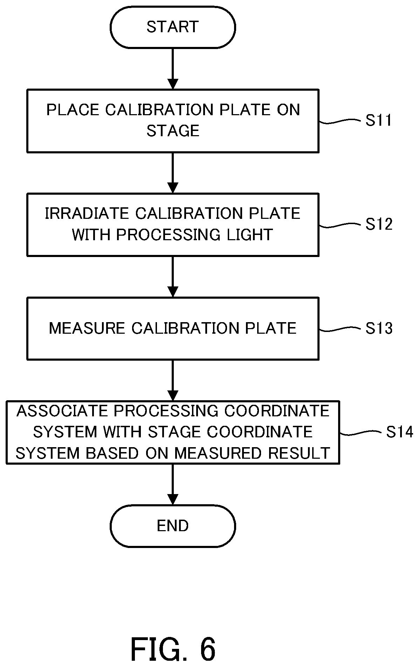

Next, with reference to FIG. 6, the coordinate matching operation will be described. FIG. 6 is a flowchart that illustrates a flow of the coordinate matching operation.

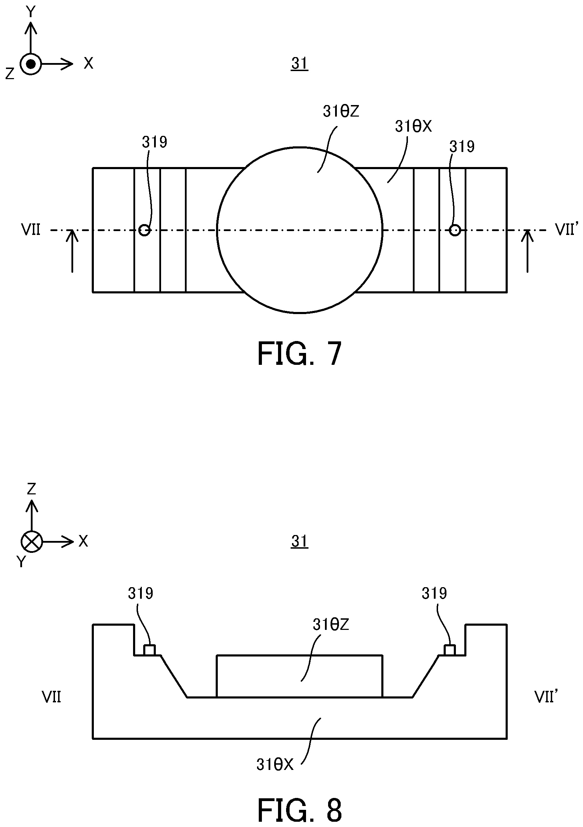

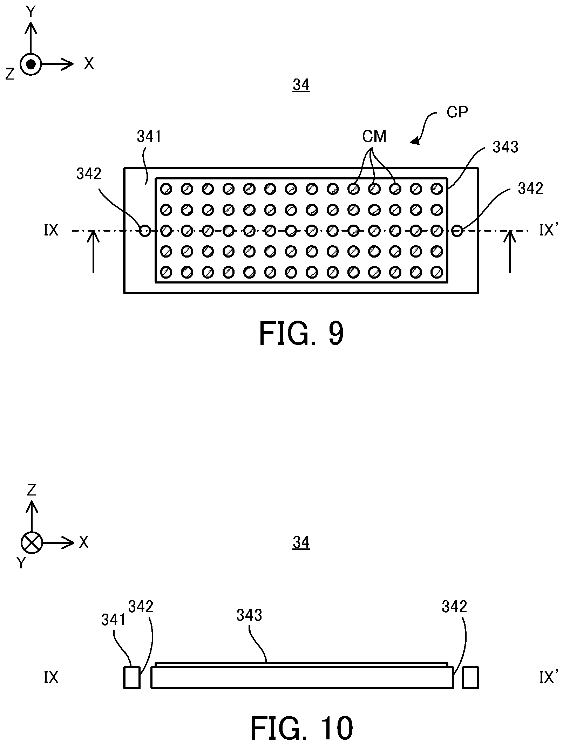

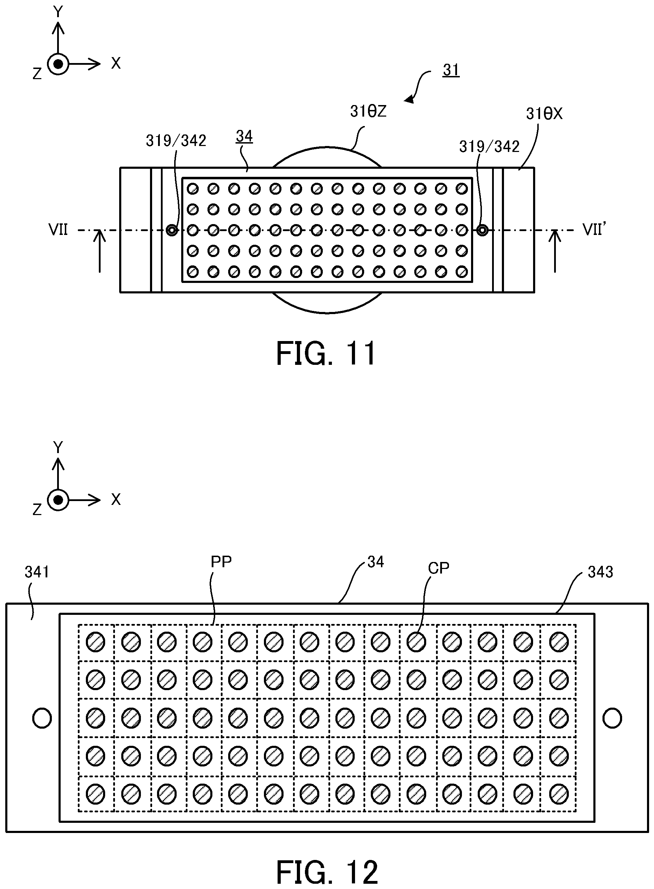

As illustrated in FIG. 6, firstly, a calibration plate 34 is placed on the stage 31 (a step S11). Especially, the calibration plate 34 is placed on the stage 31 so that a positional relationship between the calibration plate 34 and the stage 31 is a desired positional relationship. In the first example embodiment, in order to place the calibration plate 34 on the stage 31 so that the positional relationship between the calibration plate 34 and the stage 31 is the desired positional relationship, a mark for an alignment is formed on each of the calibration plate 34 and the stage 31. Next, with reference to FIG. 7 to FIG. 11, examples of the stage 31 and the calibration plate 34 on which the marks for the alignment are formed will be described. FIG. 7 is a planar view that illustrates the stage 31 on which the mark for a position adjustment is formed. FIG. 8 is a VII-VII' cross-sectional view of the stage 31 illustrated in FIG. 7. FIG. 9 is a planar view that illustrates the calibration plate 34 on which the mark for the alignment is formed. FIG. 10 is a IX-IX' cross-sectional view of the calibration plate 34 illustrated in FIG. 9. FIG. 11 is a planar view that illustrates the calibration plate 34 that is placed on the stage 31.

As illustrated in FIG. 7 and FIG. 8, a plurality of pins 319 are formed on the stage 31 as the marks for the alignment. In an example illustrated in FIG. 7 and FIG. 8, two pins 319 are formed on an upper surface (especially, an upper surface that is higher than or at the same height as an upper surface of the stage 31θZ) of the stage 31θX included in the stage 31. However, a formed position and the number of the pin 319 are not limited to examples illustrated in FIG. 7 and FIG. 8. The pin 319 is a member that protrudes from the upper surface of the stage 31 (the upper surface of the stage 31θX in the example illustrated in FIG. 7 and FIG. 8) along the Z axis direction. Note that an information related to positions of the pins 319 in the stage coordinate system is an information that is already known to the control apparatus 7.

As illustrated in FIG. 9 and FIG. 10, the calibration plate 34 includes a base member 341. The base member 341 is a plate-shaped member. The base member 341 has a shape and a size that allow it to be placed on the stage 31. A plurality of through-holes 342 are formed in the base member 341 as the marks for the alignment. In an example illustrated in FIG. 9 and 10, two through-holes 342 are formed in the base member 341. The through-hole 342 penetrates the base member 341 along the Z axis direction.

In the first example embodiment, as illustrated in FIG. 11, the calibration plate 34 is placed on the stage 31 so that the pins 319 are inserted into the through-holes 342. The calibration plate 34 is placed on the stage 31 (namely, on the stage 31θX and the stage 31θZ) in a state where the pins 319 are inserted into the through-holes 322. The stage 31 supports (for example, holds) the calibration plate 34 in a state where the pins 319 are inserted into the through-holes 322. Thus, an arrangement aspect of the through-holes 342 is same as an arrangement aspect of the pins 319. Furthermore, the number of the through-holes 342 is equal to (alternatively, may be more than) the number of the pins 319. As a result, the calibration plate 34 is placed on the stage 31 to have the desired positional relationship relative to the stage 31. Specifically, the calibration plate 34 is placed on the stage 31 to have the desired positional relationship relative to the pins 319 on the stage 31. The position at which the pin 319 is formed may be used as a fiducial position on the stage 31 in placing the calibration plate 34 on the stage 31. In this case, the calibration plate 34 is placed on the stage 31 in a state where it is aligned to have the desired positional relationship relative to the fiducial position on the stage 31.

A calibration pattern CP, which is measurable by the measurement apparatus 4, is formed on the calibration plate 34. In the example illustrated in FIG. 9, the calibration pattern CP is a measurement pattern including a plurality of calibration markers CM arranged in a matrix pattern. A position at which the calibration pattern CP is formed (in the example illustrated in FIG. 9, positions at which the plurality of calibration markers CM are formed) on the calibration plate 34 is an information that is already known to the control apparatus 7. In this case, since the calibration plate 34 is placed on the stage 31 to have the desired positional relationship relative to the pins 319 placed at known positions in the stage coordinate system, the position at which the calibration pattern CP is formed in the stage coordinate system is also an information that is already known to the control apparatus 7.

A thermosensitive film 343 having a thermal sensitivity (namely, sensitivity) to the processing light EL is formed on the calibration plate 34. Note that a photosensitive film having a photosensitivity (namely, sensitivity) to the processing light EL may be formed on the calibration plate 34, in addition to or instead of the thermosensitive film 343. The thermosensitive film 343 is formed on the calibration plate 34 to cover the calibration pattern CP. The thermosensitive film 343 is transparent to the measurement light ML (for example, a visible light) that is used by the measurement apparatus 4. Thus, the calibration pattern CP covered with the thermosensitive film 343 is measurable by the measurement apparatus 4.

Again in FIG. 6, after the calibration plate 34 is placed on the stage 31, the control apparatus 7 irradiates the processing unit 2 and the stage unit 3 to irradiate at least a part of the calibration plate 34 with the processing light EL (a step S12). Specifically, the control apparatus 7 changes the relative positional relationship between the processing head 21 and the stage 31 so that the target irradiation area EA moves along a predetermined moving pattern on at least a part of the thermosensitive film 343 of the calibration plate 34. Specifically, the control apparatus 7 moves the processing head 21 so that the target irradiation area EA moves along a predetermined moving trajectory on at least a part of the thermosensitive film 343 of the calibration plate 34. In this case, the control apparatus 7 may not move the stage 31. Furthermore, the control apparatus 7 irradiates the target irradiation area EA, which moves along the predetermined moving trajectory on at least a part of the thermosensitive film 343, with the processing light EL. As a result, as illustrated in FIG. 12 that is a planar view illustrating the calibration plate 34 that is irradiated with the processing light EL, an exposed pattern PP corresponding to the moving trajectory of the target irradiation area EA is formed on at least a part of the thermosensitive film 343. In an example illustrated in FIG. 12, 5 the target irradiation area EA moves along a grid-like moving trajectory including a moving trajectory extending along each of the X axis direction and the Y axis direction between the plurality of calibration markers CM.

Then, the measurement apparatus 4 measures at least a part of the calibration plate 34 (a step S13). Specifically, the measurement apparatus 4 measures the exposed pattern PP formed on the thermosensitive film 343 of the calibration plate 34. Namely, the measurement apparatus 4 measures a part of the thermosensitive film 343 that is exposed by the processing light EL. Moreover, since the thermosensitive film 343 is transparent to the measurement light ML, the measurement apparatus 4 measures the calibration pattern CP as well as the exposed pattern PP. Therefore, a measured result by the measurement apparatus 4 at the step S13 includes an information related to a measured result of the exposed pattern PP and an information related to a measured result of the calibration pattern CP.

Then, the control apparatus 7 associates the processing coordinate system with the stage coordinate system based on the measured result by the measurement apparatus 4 at the step S13 (a step S14). Specifically, the control apparatus 7 calculates a position of the exposed pattern PP and a position of the calibration pattern CP based on the measured result by the measurement apparatus 4. Here, as described above, the calibration plate 34 on which the calibration pattern CP is formed has the desired positional relationship relative to the stage θZ of the stage 31 and the position at which the calibration pattern CP is formed is the information that is already known to the control apparatus 7. Thus, the calculated position of the calibration pattern CP substantially corresponds to the position of the calibration pattern CP in the stage coordinate system. Thus, the control apparatus 7 is capable of calculating the position of the exposed pattern PP in the stage coordinate system by comparing the position of the calibration pattern CP in the stage coordinate system with the position of the exposed pattern PP. Furthermore, since the exposed pattern PP is formed by the processing light EL from the processing head 21, the position of the exposed pattern PP indirectly indicates a position of the processing head 21. Namely, the position of the exposed pattern PP indirectly indicates the position of the processing head 21 in the processing coordinate system. Thus, the control apparatus 7 is capable of associating the position of the processing head 21 in the processing coordinate system with the position of the calibration pattern CP in the stage coordinate system based on the position of the exposed pattern PP and the position of the calibration pattern CP. As a result, the control apparatus 7 is capable of associating the processing coordinate system with the stage coordinate system. Note that the position of the exposed pattern PP and the position of the calibration pattern CP may be measured by a measurement apparatus (as one example, an external measurement apparatus) that is different from the measurement apparatus 4.

After the processing coordinate system is associated with the stage coordinate system, a misalignment of the processing coordinate system relative to the stage coordinate system is calculatable. The misalignment of the processing coordinate system relative to the stage coordinate system corresponds to a difference between an ideal (namely, a designed) position of the exposed pattern PP and the actually measured position of the exposed pattern PP. The misalignment of the processing coordinate system relative to the stage coordinate system may include a difference between an origin point of the stage coordinate system and an origin point of the processing coordinate system, for example. The misalignment of the processing coordinate system relative to the stage coordinate system may include an misalignment of a moving plane of the processing head 21 (for example, at least one of a moving plane when the processing head 21 moves along the X axis and a moving plane when the processing head 21 moves along the Y axis) relative to an axis of the stage coordinate system, for example. In this case, the control apparatus 7 may calculate a movement correction value that allows the processing head 21 to move so as to cancel (in other words, correct) the misalignment. For example, the control apparatus 7 may calculate at least one of a movement correction value for correcting the moving direction when the processing head 21 moves along the X axis, a movement correction value for correcting the moving distance when the processing head 21 moves along the X axis, a movement correction value for correcting the moving direction when the processing head 21 moves along the Y axis and a movement correction value for correcting the moving distance when the processing head 21 moves along the Y axis. When the above described additive processing operation is performed, the control apparatus 7 may move the processing head 21 by using the movement correction value calculated by the coordinate matching operation. Namely, When the above described additive processing operation is performed, the control apparatus 7 may move the processing head 21 based on the measured result of the calibration plate 34 in the coordinate matching operation. As a result, even when there is the misalignment of the processing coordinate system relative to the stage coordinate system, the control apparatus 7 is capable of moving the processing head in a same manner as a case where there is no misalignment of the processing coordinate system relative to the stage coordinate system. Namely, as a result, even when there is the misalignment of the processing coordinate system relative to the stage coordinate system, the control apparatus 7 is capable of moving the processing head 21 so that the desired position on the workpiece W is irradiated with the processing light EL.

Moreover, after the processing coordinate system is associated with the stage coordinate system, the control apparatus 7 is capable of converting a certain coordinate position in either one of the e processing coordinate system and the stage coordinate system into a coordinate position in the other one of the e processing coordinate system and the stage coordinate system. Thus, the operation for "associating the e processing coordinate system with the stage coordinate system" may be regarded to be substantially equivalent to an operation for calculating an information (for example, a conversion matrix) that is used to convert a certain coordinate position in either one of the e processing coordinate system and the stage coordinate system into a coordinate position in the other one of the e processing coordinate system and the stage coordinate system

Note that the calibration plate 34 is attached to the stage 31θX in the above described example, however, the calibration plate 34 may be attached to the stage 31θZ.

### (1-2-3) Eccentric Amount Obtaining Operation

Next, the eccentric amount obtaining operation will be described. In the below described description, a technical reason why the eccentric amount obtaining operation is performed will be described firstly, and then, a flow of the eccentric amount obtaining operation will be described.

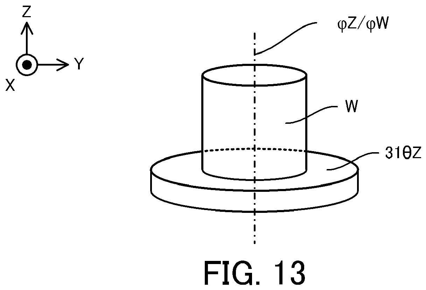

Firstly, FIG. 13 illustrates the workpiece W that is supported by the stage 31 so that the eccentric amount δ that is the amount of the misalignment between the rotational axis of the stage 31 and the ideal rotational axis of the workpiece W is zero. Note that FIG. 13 to FIG. 17 omit an illustration of a holding clasp for fixing the workpiece W on the stage 31 for the purpose of simple illustration. In the first example embodiment, since the stage 31θZ supports the workpiece W, it is assumed that the eccentric amount δ means the amount of the misalignment between the rotational axis of the stage 31θZ (in the below described description, it is referred to as a "rotational axis ϕZ") and the ideal rotational axis of the workpiece W (in the below described description, it is referred to as a "rotational axis ϕW"). Note that the rotational axis (ϕW may be typically an axis passing through a centroid (namely, a center of mass) of the workpiece W. In an example illustrated in FIG. 13, the rotational axis (ϕW of the cylindrical workpiece W extending in a direction along the rotational axis ϕZ is an axis passing through a center of a cylinder. In this case, the eccentric amount δ may mean an amount of an misalignment between the rotational axis ϕZ and the centroid of the workpiece W.

In a case where the eccentric amount δ is zero as illustrated in FIG. 13, the relative positional relationship between the processing head 21 and the workpiece W does not change in a state where the processing head 21 does not move when the stage 31θZ rotates around the rotational axis ϕZ. Specifically, FIG. 14A illustrates the relative positional relationship between the processing head 21 and the workpiece W supported by the stage 31θZ rotating around the rotational axis ϕZ parallel to the Z axis in a state where the eccentric amount δ is zero. FIG. 14B illustrates the relative positional relationship between the processing head 21 and the workpiece W supported by the stage 31θZ rotating around the rotational axis ϕZ inclined with respect to the Z axis in a state where the eccentric amount δ is zero. FIG. 14B illustrates the relative positional relationship between the processing head 21 and the workpiece W supported by the stage 31θZ rotating around the rotational axis ϕZ inclined perpendicular to the Z axis in a state where the eccentric amount δ is zero. Note that a state of the rotational axis ϕZ relative to the Z axis is changeable by the rotation of the stage 31θX. As illustrated in FIG. 14A to FIG. 14C, when the eccentric amount δ is zero, the rotational axis ϕZ overlaps with (namely, is same as) the rotational axis (ϕW. Thus, when the stage 31θZ rotates around the rotational axis ϕZ, the workpiece W rotates around the rotational axis (ϕW. As a result, the relative positional relationship between the processing head 21 and the workpiece W does not change.

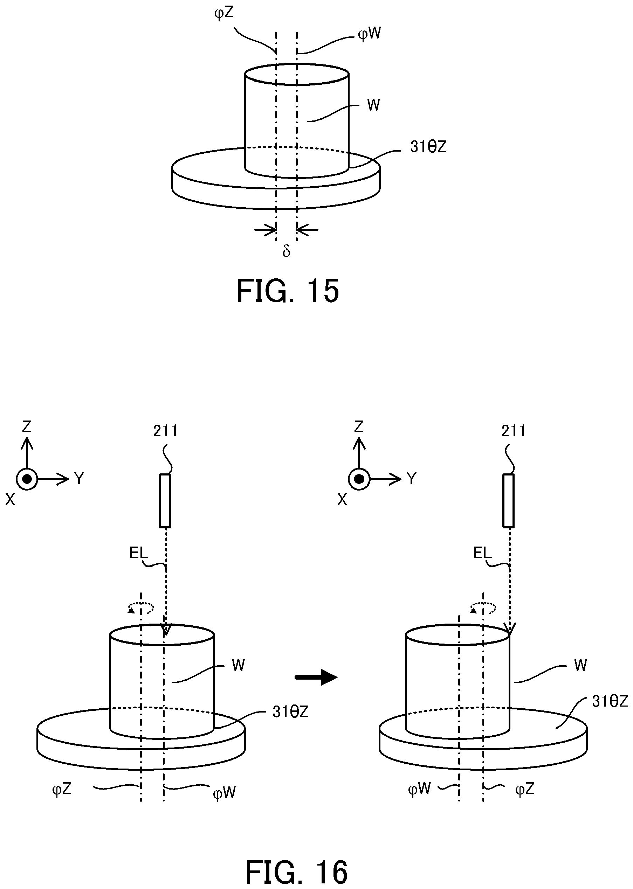

On the other hand, FIG. 15 illustrates the workpiece W that is supported by the stage 31 so that the eccentric amount δ is not zero. In a case where the eccentric amount δ is not zero, there is a possibility that the relative positional relationship between the processing head 21 and the workpiece W changes even in a state where the processing head 21 does not move when the stage 31θZ rotates around the rotational axis ϕZ. Namely, there is a possibility that a relative positional relationship between the processing coordinate system and the workpiece W changes.

Specifically, each of FIG. 16A and FIG. 16B illustrate the relative positional relationship between the processing head 21 and the workpiece W supported by the stage 31θZ rotating around the rotational axis ϕZ parallel to the Z axis in a state where the eccentric amount δ is not zero. As illustrated in FIG. 16A and FIG. 16B, when the eccentric amount δ is not zero, the rotational axis ϕZ does not overlap with (namely, is not same as) the rotational axis (ϕW. Thus, when the stage 31θZ rotates around the rotational axis ϕZ, the workpiece W rotates around the rotational axis ϕZ that is different from the rotational axis (ϕW. As a result, the workpiece W is displaced relative to the processing head 21 (relative to the processing coordinate system) toward a direction based on a rotational angle of the stage 31θZ around the rotational axis ϕZ by a displaced amount based on the rotational angle of the stage 31θZ around the rotational axis ϕZ. Specifically, the workpiece W is displaced relative to the processing head 21 (relative to the processing coordinate system) in a plane perpendicular to the rotational axis ϕZ (in an example illustrated in FIG. 16A and FIG. 16B, the XY plane).

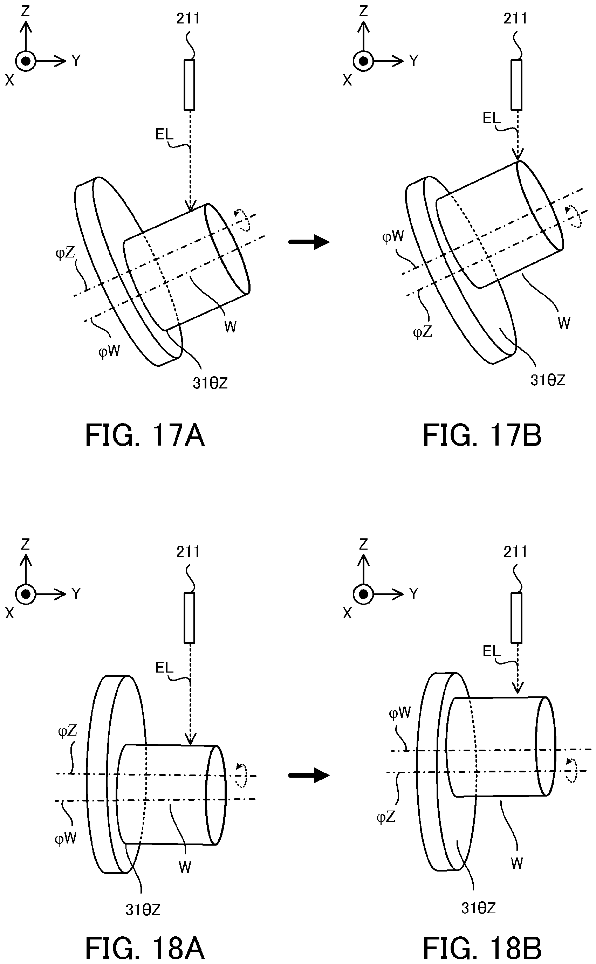

Each of FIG. 17A and FIG. 17B illustrate the relative positional relationship between the processing head 21 and the workpiece W supported by the stage 31θZ rotating around the rotational axis ϕZ inclined with respect to the Z axis in a state where the eccentric amount δ is not zero. Even in this case, the workpiece W is displaced relative to the processing head 21 (relative to the processing coordinate system) in a plan perpendicular to the rotational axis ϕZ (in the example illustrated in FIG. 17A and FIG. 17B, a plane that intersects with the X axis, the Y axis and the Z axis).

Each of FIG. 18A and FIG. 18B illustrate the relative positional relationship between the processing head 21 and the workpiece W supported by the stage 31θZ rotating around the rotational axis ϕZ perpendicular to the Z axis in a state where the eccentric amount δ is not zero. Even in this case, the workpiece W is displaced relative to the processing head 21 (relative to the processing coordinate system) in a plan perpendicular to the rotational axis ϕZ (in the example illustrated in FIG. 18A and FIG. 18B, the XZ plane).

There is a possibility that the displacement of the workpiece W relative to the processing head 21 due to the rotation of the stage 31θZ (namely, a variation of the relative positional relationship between the processing head 21 and the workpiece W) results in an undesired variation of the irradiation position of the processing light EL on the workpiece W. As a result, there is a possibility that the processing head 21 is not capable of irradiating the desired position on the workpiece W with the processing light EL. Thus, in the first example embodiment, the processing system SYSa obtains the eccentric amount δ by the eccentric amount obtaining operation and processes the workpiece W by using the obtained eccentric amount δ in performing the additive processing operation (namely, during the processing of the workpiece W, during the irradiation of the processing light EL). Specifically, the processing system SYSa rotates the stage 31 (for example, at least one of the stage 31θX and the stage 31θZ) and moves the processing head 21 based on the obtained eccentric amount δ. Namely, the processing system SYSa moves the processing head 21 in parallel with the rotation of the stage 31 based on the obtained eccentric amount δ.

More specifically, the processing system SYSa rotates the stage 31 based on the eccentric amount δ and moves the processing head 21 based on the eccentric amount δ so as to reduce (typically, cancel, the same is applied to the below described description) an influence of the displacement of the workpiece W relative to the processing head 21 due to the rotation of the stage 31. Here, as described above, the workpiece W is displaced relative to the processing head 21 (relative to the processing coordinate system) in the plane perpendicular to the rotational axis ϕZ due to the rotation of the stage 31. Thus, the processing system SYSa may move the processing head 21 in the plane perpendicular to the rotational axis ϕZ based on the eccentric amount δ so that the desired position on the workpiece W is irradiated with the processing light EL even when the workpiece W is displaced relative to the processing head 21 due to the rotation of the stage 31. For example, when the workpiece W is displaced relative to the processing head 21 (relative to the processing coordinate system) in the XY plane as illustrated in FIG. 16A and FIG. 16B, the processing system SYSa may move the processing head 21 in the XY plane so that the desired position on the workpiece W is irradiated with the processing light EL even when the workpiece W is displaced relative to the processing head 21 due to the rotation of the stage 31. In this case, the processing system SYSa may move the processing head 21 along at least one of the X axis direction and the Y axis direction. For example, when the workpiece W is displaced relative to the processing head 21 (relative to the processing coordinate system) in the plane that intersects with the X axis, the Y axis and the Z axis (namely, a plane that is inclined with respect to the moving direction of the processing head 21) as illustrated in FIG. 17A and FIG. 17B, the processing system SYSa may move the processing head 21 in the plane that intersects with the X axis, the Y axis and the Z axis so that the desired position on the workpiece W is irradiated with the processing light EL even when the workpiece W is displaced relative to the processing head 21 due to the rotation of the stage 31. In this case, the processing system SYSa may move (namely, move up and down) the processing head 21 along the Z axis direction and may move the processing head 21 along at least one of the X axis direction and the Y axis direction. For example, when the workpiece W is displaced relative to the processing head 21 (relative to the processing coordinate system) in the XZ plane as illustrated in FIG. 18A and FIG. 18B, the processing system SYSa may move the processing head 21 in the XZ plane so that the desired position on the workpiece W is irradiated with the processing light EL even when the workpiece W is displaced relative to the processing head 21 due to the rotation of the stage 31. In this case, the processing system SYSa may move (namely, may move up and down) the processing head 21 along the Z axis direction.

The processing system SYSa is capable of irradiating the desired position on the workpiece W with the processing light EL by moving the processing head 21 even when the workpiece W is displaced relative to the processing head 21 (relative to the processing coordinate system) due to the rotation of the stage 31θZ. As a result, the processing system SYSa is capable of irradiating the desired position on the workpiece W with the processing light EL without performing an strict alignment of the workpiece W on the rotating stage 31.

The processing system SYSa may use a measured result by the position measurement device 33 that measures the position of the stage 31. For example, the processing system SYSa may calculate the rotational angle of the stage 31θZ around the rotational axis ϕZ based on the measured result by the position measurement device 33 and may move the processing head 21 based on the calculated rotational angle.

Incidentally, when the stage 31 is movable along at least one of the X axis, the Y axis and the Z axis, the processing system SYSa may move the stage 31 in addition to or instead of the processing head 21 so that the desired position on the workpiece W is irradiated with the processing light EL even when the workpiece W is displaced relative to the processing head 21 due to the rotation of the stage 31. Namely, the processing system SYSa may move the workpiece W in addition to or instead of the processing head 21 by considering the displacement of the workpiece W relative to the processing head 21 due to the rotation of the stage 31.

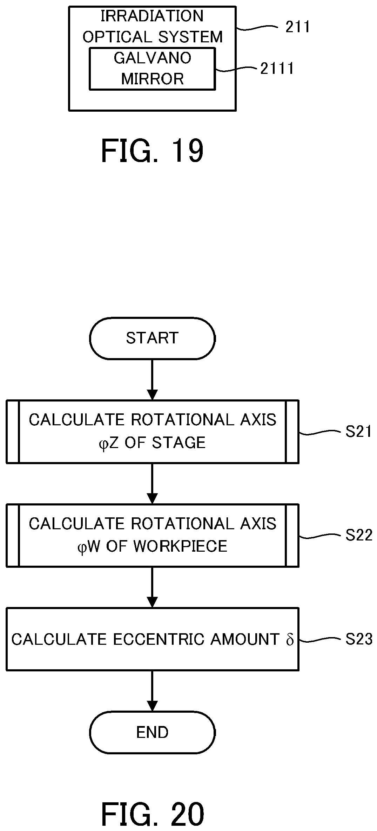

Moreover, when the irradiation optical system 211 includes an irradiation position change optical member that is movable to change the irradiation position of the processing light EL on the workpiece W, the processing system SYSa may move the irradiation position change optical member in addition to or instead of the processing head 21 by considering the displacement of the workpiece W relative to the processing head 21 due to the rotation of the stage 31. As one example of the irradiation position change optical member, there is a Galvano mirror 2111 as illustrated in FIG. 19 that illustrates a configuration of the irradiation optical system 211. In this case, the processing system SYSa may move the Galvano mirror 2111 (specifically, may control the movement of the Galvano mirror 2111) by considering the displacement of the workpiece W relative to the processing head 21 due to the rotation of the stage 31. As another example of the irradiation position change optical member, there is a polygonal mirror.

Next, with reference to FIG. 20, the eccentric amount obtaining operation will be described. FIG. 20 is a flowchart that illustrates the flow of the eccentric amount obtaining operation.

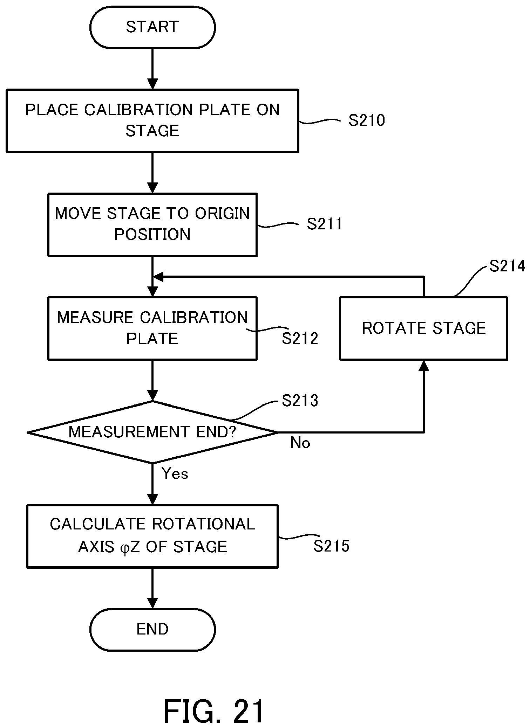

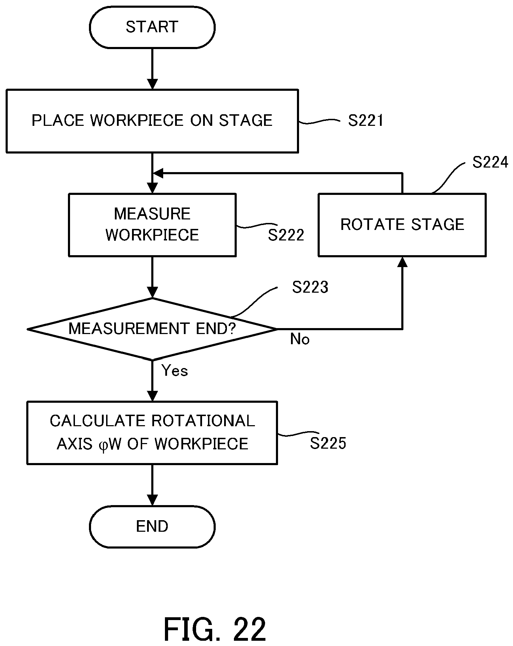

As illustrated in FIG. 20, the control apparatus 7 calculates the rotational axis of the stage 31 (the rotational axis ϕZ of the stage 31θZ in the first example embodiment) by using the measured result of the stage 31 by the measurement apparatus 4 (a step S21). Note that a detailed description of an operation for calculating the rotational axis ϕZ will be described later in detail with reference to FIG. 21. Furthermore, the control apparatus 7 calculates the rotational axis (ϕW of the workpiece W by using the measured result of the workpiece W by the measurement apparatus 4 before or after the step S21 (a step S22). Note that a detailed description of an operation for calculating the rotational axis (ϕW will be described later in detail with reference to FIG. 22. Then, the control apparatus 7 calculates the eccentric amount δ based on the rotational axis ϕZ calculated at the step S21 and the rotational axis (ϕW calculated at the step S22 (a step S23).

Note that the rotational axis ϕZ calculated at the step S21 is an information unique to the position of the stage 31. Thus, it can be said that the rotational axis ϕZ calculated at the step S21 is one specific example of a stage position information related to the position of the stage 31. In this case, the control apparatus 7 may calculate any stage position information related to the position of the stage 31 in addition to or instead of the rotational axis ϕZ by using the measured result of the stage 31 by the measurement apparatus 4. Then, the control apparatus 7 may calculate the eccentric amount δ based on the stage position information.

Incidentally, when the position of the rotational axis ϕZ or the position of the stage 31 is already known, the step S21 may not be performed.

The rotational axis (ϕW calculated at the step S22 is an information unique to the position of the workpiece W. Thus, it can be said that the rotational axis (ϕW calculated at the step S2w is one specific example of a workpiece position information related to the position of the workpiece W. In this case, the control apparatus 7 may calculate any workpiece position information related to the position of the workpiece W in addition to or instead of the rotational axis ϕW by using the measured result of the workpiece W by the measurement apparatus 4. Then, the control apparatus 7 may calculate the eccentric amount δ based on the workpiece position information.

It can be said that the eccentric amount δ calculated at the step S23 is one specific example of a positional relationship information related to the positional relationship between the rotational axis ϕZ of the stage 31θZ and the workpiece W. Namely, it can be said that the eccentric amount δ calculated at the step S23 is one specific example of the positional relationship information related to the positional relationship between the stage 31 and the workpiece W. In this case, the control apparatus 7 may calculate any positional relationship information related to the positional relationship between the rotational axis ϕZ of the stage 31θZ and the workpiece W in addition to or instead of the eccentric amount δ. Then, in the additive processing operation, the processing system SYSa may move the processing head 21 based on any positional relationship information by considering the displacement of the workpiece W relative to the processing head 21 due to the rotation of the stage 31.

Next, with reference to FIG. 21, the operation for calculating the rotational axis ϕZ of the stage 31θZ at the step S21 in FIG. 20 will be described. FIG. 21 is a flowchart that illustrates the flow of the operation for calculating the rotational axis ϕZ of the stage 31θZ at the step S21 in FIG. 20.

As described above, the control apparatus 7 calculates the rotational axis ϕZ of the stage 31θZ by using the measured result of the stage 31 by the measurement apparatus 4. However, in the first example embodiment, the measurement apparatus 4 measures at least a part of the calibration plate 34 placed on the stage 31 instead of directly measuring at least a part of the stage 31 in order to easily calculating the rotational axis ϕZ from the measured result by the measurement apparatus 4. Namely, the measurement apparatus 4 indirectly measures at least a part of the stage 31 by measuring at least a part of the calibration plate 34 placed on the stage 31. However, the measurement apparatus 4 may directly measure at least a part of the stage 31. For example, when the calibration pattern CP is formed on the stage 31 as described later, the measurement apparatus 4 may directly measure at least a part of the stage 31 (for example, a part on which the calibration pattern CP is formed).

Thus, as illustrated in FIG. 21, the calibration plate 34 is placed on the stage 31θZ of the stage 31 (a step S210). Even in the eccentric amount obtaining operation, the calibration plate 34 may be placed on the stage 31 so that the positional relationship between the calibration plate 34 and the stage 31θZ of the stage 31 is the desired positional relationship, as with the coordinate matching operation. However, the thermosensitive film 343 may not be formed on the calibration plate 34 placed on the stage 31 in the eccentric amount obtaining operation. Note that another calibration plate on which a desired calibration pattern CP is formed may be placed on the stage 31 instead of the calibration plate 34.

Then, the control apparatus 7 controls the stage driving system 32 so that the stage 31 is located at an origin point position (a step S211). The origin point position may be a position at which the rotational angle measured by the position measurement device 33 is zero.

Then, the measurement apparatus 4 measures at least a part of the calibration plate 34 (a step S212). Specifically, the measurement apparatus 4 measures the calibration pattern CP formed on the calibration plate 34.

Then, the control apparatus 7 determines whether or not the measurement of the calibration plate 34 should be ended (a step S213). For example, the control apparatus 7 may determine that the measurement of the calibration plate 34 should be ended when the measurement apparatus 4 measures the calibration plate 34 by a first desired number of times. It is preferable that the first desired number of times be at least two times.

As a result of the determination at the step S213, when it is determined that the measurement of the calibration plate 34 should not be ended (the step S213: No), the control apparatus 7 rotates the stage 31θZ around the rotational axis ϕZ by a first desired angle (step S214). The first desired angle may be any angle smaller than 360 degree. The first desired angle may be any angle that is different from a multiple of 360 degree. Then, the measurement apparatus 4 measures the calibration plate 34 again (the step S212). Namely, in the first example embodiment, the measurement apparatus 4 measures the calibration plate 34 each time the stage 31 rotates. The measurement apparatus 4 measures the calibration plate 34 a plurality of times from different directions. The measurement apparatus 4 measures the calibration plate 34 in different attitudes a plurality of times.

On the other hand, as a result of the determination at the step S213, when it is determined that the measurement of the calibration plate 34 should be ended (the step S213: Yes), the control apparatus 7 calculates the rotational axis ϕZ of the stage 31θZ by using the measured result of the calibration plate 34 by the measurement apparatus 4 at the step S212 (a step S215). Specifically, the control apparatus 7 is capable of calculating the position of the calibration pattern CP based on the measured result of the calibration plate 34. The position of the calibration pattern CP substantially corresponds to the position of the stage 31 supporting the calibration plate 34. Therefore, the control apparatus 7 may be regarded to indirectly calculate the position of the stage 31 by calculating the position of the calibration pattern CP. The measurement apparatus 4 may be regarded to indirectly measure the position of the stage 31 by measuring the position of the calibration pattern CP. The control apparatus 7 calculates the position of the calibration pattern CP as many times as the stage 31θZ rotates. Namely, the control apparatus 7 calculates the position of the calibration pattern CP for each rotating angle of the stage 31θZ during the measurement of the calibration plate 34. Then, the control apparatus 7 performs a fitting of the position of the calibration pattern CP calculated for each rotating angle of the stage 31θZ by a circle. Then, the control apparatus 7 calculates, as the rotational axis ϕZ of the stage 31θZ, an axis that passes through a center of the circle obtained by the fitting and that is perpendicular to the circle.

Note that the control apparatus 7 may calculates the rotational axis of the stage 31θX by performing an operation that is same as the operation illustrated in FIG. 21.

Next, with reference to FIG. 22, the operation for calculating the rotational axis ϕW of the workpiece W at the step S22 in FIG. 20 will be described. FIG. 22 is a flowchart that illustrates the flow of the operation for calculating the rotational axis ϕW of the workpiece W at the step S22 in FIG. 20.

As illustrated in FIG. 22, firstly, the workpiece W is placed on the stage (a step S221). Then, the measurement apparatus 4 measures at least a part of the workpiece W (a step S222).

Then, the control apparatus 7 determines whether or not the measurement of the workpiece W should be ended (a step S223). For example, the control apparatus 7 may determine that the measurement of the workpiece W should be ended when the measurement apparatus 4 measures the workpiece W by a second desired number of times. It is preferable that the second desired number of times be at least two times.

As a result of the determination at the step S223, when it is determined that the measurement of the workpiece W should not be ended (the step S223: No), the control apparatus 7 rotates the stage 31θZ around the rotational axis ϕZ by a second desired angle (step S224). The second desired angle may be any angle smaller than 360 degree. The second desired angle may be any angle that is different from a multiple of 360 degree. Then, the measurement apparatus 4 measures the workpiece W again (the step S211). Namely, in the first example embodiment, the measurement apparatus 4 measures the workpiece W each time the stage 31 rotates. The measurement apparatus 4 measures the workpiece W a plurality of times from different directions. The measurement apparatus 4 measures the workpiece W in different rotational attitudes a plurality of times.

On the other hand, as a result of the determination at the step S223, when it is determined that the measurement of the workpiece W should be ended (the step S223: Yes), the control apparatus 7 calculates the rotational axis ϕW of the workpiece W by using the measured result of the workpiece W by the measurement apparatus 4 at the step S222 (a step S225). Specifically, the control apparatus 7 generates an information related to a position and / or a shape of a part of the workpiece W in a certain rotational attitude included in a measurement range of the measurement apparatus 4 based on the measured result of the workpiece W in a certain rotational attitude. As one example, the control apparatus 7 may generate a point cloud information related to a plurality of points constituting a part of the surface of the workpiece W in a certain rotational attitude included in the measurement range of the measurement apparatus 4 based on the measured result of the workpiece W in a certain rotational attitude. The control apparatus 7 repeats an operation for generating the information related to the position and / or the shape of at least a part of the workpiece W as many times as the workpiece W is measured. Then, the information related to the position and / or the shape of at least a part of the workpiece W is merged based on the rotational attitude of the workpiece W. For example, the control apparatus 7 may generate a fist point cloud information from the measured result of the workpiece W in a first rotational attitude, generate a second point cloud information from the measured result of the workpiece W in a second rotational attitude, and merge the first and second point cloud information based on the first and second rotational attitudes. As a result, compared to a case where the measurement apparatus 4 measures the workpiece W from only one direction, an area a presence of which is indicated by the point cloud information is larger on the surface of the workpiece W. In other words, there is a higher possibility that the control apparatus 7 is capable of recognizing whole of the workpiece W. Incidentally, when it is found that there is a part of the workpiece W the presence of which is not indicated by the merged point cloud information, the control apparatus 7 may control the measurement apparatus 4 to newly measure this part, and may further merge the measured result by the measurement apparatus 4 with the merged point cloud information. Then, the control apparatus 7 calculates the rotational axis ϕW of the workpiece W based on the merged point cloud information. For example, when a three-dimensional model (for example, a design information) of the workpiece W can be obtained, the control apparatus 7 may perform a fitting of the three-dimensional model of the workpiece W on the merged point cloud information, and may calculate the rotational axis ϕW of the workpiece W based on the three-dimensional model on which the fitting is already performed. Alternatively, when the three-dimensional model of the workpiece W cannot be obtained, the control apparatus 7 may generate a surface model (alternatively, a solid model) of the workpiece W based on the merged point cloud information, and may calculate the rotational axis ϕW of the workpiece W based on the surface model (alternatively, the solid model).

To summarize the control apparatus 7 described above, the control apparatus 7 obtains a plurality of measured results obtained by measuring the calibration plate 34 a plurality of times from different directions, and calculates the rotational axis ϕZ of the stage 31 based on the plurality of measured results at the step S21 in FIG. 20. Furthermore, the control apparatus 7 obtains a plurality of measured results obtained by measuring the workpiece W a plurality of times from different directions, and calculates the rotational axis ϕW of the workpiece W based on the plurality of measured results at the step S22 in FIG. 20. Furthermore, the control apparatus 7 calculates the eccentric amount δ based on the calculated rotational axes ϕZ and ϕW. Thus, the control apparatus 7 may be regarded to serve as a measurement apparatus or an arithmetic apparatus that includes: a measurement part that is configured to obtain a first measured result of the workpiece W measured from a first direction (namely, the workpiece W in a first rotational attitude) and a second measured result of the workpiece W measured from a second direction (namely, the workpiece W in a second rotational attitude); and a relationship obtaining part that is configured to obtain the eccentric amount δ (namely, a relationship between the rotational axis ϕZ and the workpiece W) based on the first and second measured results. Moreover, the eccentric amount δ corresponds to a translational movement component, in which a rotational movement component is removed, of a movement component of one point of the workpiece W when the stage 31θZ is rotated (namely, the workpiece W is rotated) in the eccentric amount obtaining operation. Thus, the control apparatus 7 may be regarded to serve as a measurement apparatus or an arithmetic apparatus that includes: the measurement part that is configured to obtain the first measured result of the workpiece W measured from the first direction (namely, the workpiece W in the first rotational attitude) and the second measured result of the workpiece W measured from the second direction (namely, the workpiece W in the second rotational attitude); and a difference obtaining part that is configured to obtain the translational movement component, in which the rotational movement component is removed, of the movement component of one point of the workpiece W when the stage 31θZ is rotated (namely, the workpiece W is rotated) in the eccentric amount obtaining operation.

Note that the control apparatus 7 calculates the rotational axis ⌀W of the workpiece W from the point cloud information here, however, the control apparatus 7 may calculate any information related to the position of the workpiece W from the point cloud information.

### (1-3) Technical Effectiveness

As described above, the processing system SYSa in the first example embodiment is capable of rotating the stage 31 and moving the processing head 21 by considering the displacement of the workpiece W relative to the processing head 21 due to the rotation of the stage 31 based on the eccentric amount δ obtained from the measured result by the measurement apparatus 4. Thus, even when the workpiece W is displaced relative to the processing head 21 due to the rotation of the stage 31, the processing system SYSa is capable of irradiating the desired position on the workpiece W with the processing light EL. As a result, the processing system SYSa is capable of properly processing the workpiece W. As one example, the processing system SYSa is capable of processing the workpiece W with a small processing error.

### (2) Processing System SYS in Second Example Embodiment

Next, the processing system SYS in a second example embodiment (in the below described description, the processing system SYS in the second example embodiment is referred to as a "processing system SYSb") will be described. The processing system SYSb in the second example embodiment is different from the processing system SYSa in the first example embodiment in that it may perform a removal processing for removing a part of the workpiece W by irradiating the workpiece W with the processing light EL. For example, the processing system SYSb may perform the removal processing so that the shape of the workpiece W is a desired shape. For example, the processing system SYSb may perform the removal processing to form a desired structure on the workpiece W. For example, the processing system SYSb may perform the removal processing to form a desired structure on the surface of the workpiece W. For example, the processing system SYSb may perform the removal processing so that the surface of the workpiece W is polished.

When the removal processing is performed, the processing system SYSb may form a riblet structure on the workpiece W. The riblet structure may be a structure by which a resistance (especially, a frictional resistance, a turbulent frictional resistance) of the surface of the workpiece W to a fluid is reducible. The riblet structure may be a structure by which a noise generated when the fluid and the surface of the workpiece W relatively moves is reducible. The riblet structure include a structure in which a plurality of grooves each of which extends along a first direction (the Y axis direction) along the surface of the workpiece W are arranged along a second direction (the X axis direction) that is along the surface of the workpiece W and that intersects with the first direction, for example.

When the removal processing is performed, the processing system SYSb may form any structure having any shape on the surface of the workpiece W. A structure that generates a swirl relative to a flow of the fluid on the surface of the workpiece W is one example of any structure. A structure that add a hydrophobic property to the surface of the workpiece W is one example of any structure. A fine texture structure (typically, a concave and convex structure) that is formed regularly or irregularly in a micro / nano-meter order is another example of any structure. This fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function and so on.

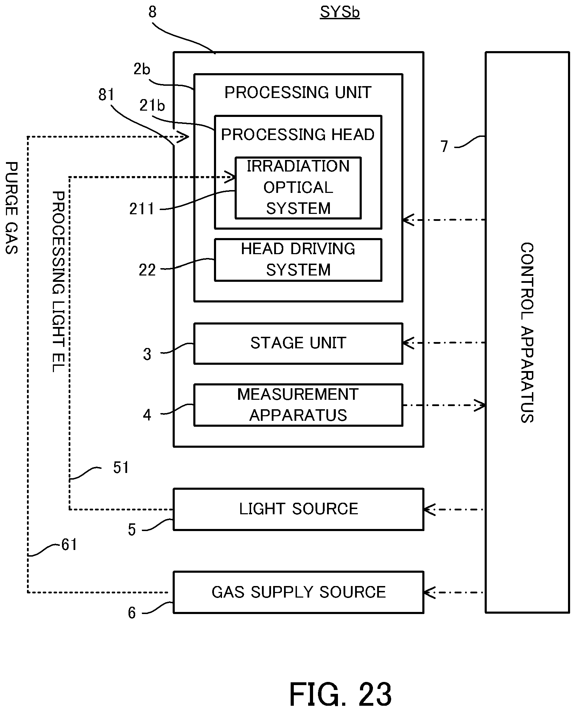

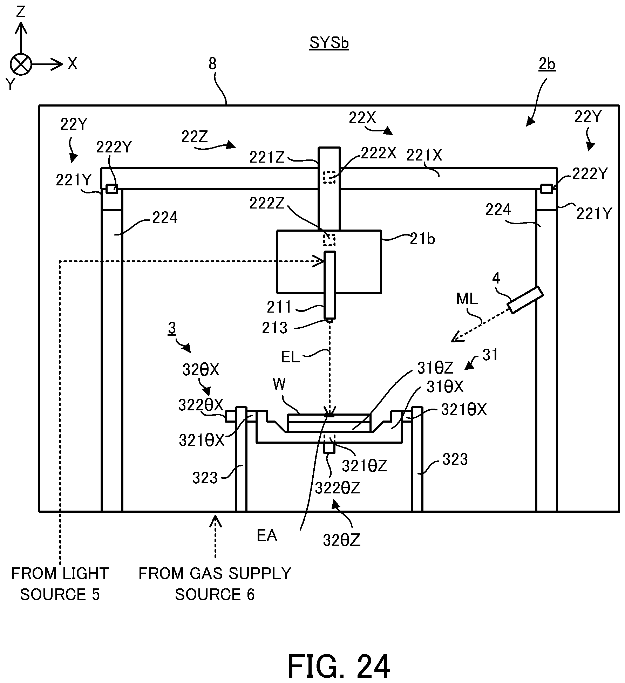

FIG. 23 and FIG. 24 illustrates the processing system SYSb. FIG. 23 is a block diagram that illustrates a system configuration of the processing system SYSb. FIG. 24 is a cross-sectional view that illustrates a configuration of the processing system SYSb. As illustrated in FIG. 23 and FIG. 24, the processing system SYSb is different from the processing system SYSa in that it may not include the material supply source 1 and mix apparatus 12. Furthermore, the processing system SYSb is different from the processing system SYSa in that it may not include the material nozzle 212. Specifically, the processing system SYSb is different from the processing system SYSa in that it includes a processing unit 2b including a processing head 21b that does not include the material nozzle 212 instead of the processing unit 2 including the processing head 21 that includes the material nozzle 212. Namely, the processing system SYSb is different from the processing system SYSa in that it may not include a component for supplying the build materials M. Another feature of the processing system SYSb may be same as another feature of the processing system SYSa.

The above described processing system SYSb may also move at least one of the processing head 21b and the stage 31 based on the results of the coordinate matching operation and the eccentric amount obtaining operation in processing (namely, performing the removal processing on) the workpiece W. For example, the processing system SYSb may rotate the stage 31 and move the processing head 21b (furthermore, the stage 31) based on the result of the eccentric amount obtaining operation while irradiating the workpiece W with the processing light EL. As a result, the processing system SYSb is capable of achieving an effect that is same as the effect achievable by the processing system SYSa.

Incidentally, when the processing system SYSb includes the irradiation position change optical member (for example, the Galvano mirror 2111) illustrated in FIG. 19, the processing system SYSb may change the irradiation position of the processing light EL by the irradiation position change optical member, instead of moving the processing head 21. In this case, the processing system SYSb may change the irradiation position of the processing light EL based on the eccentric amount δ obtained from the measured result by the measurement apparatus 4.

Incidentally, when the removal processing is performed, the processing system SYSb may irradiate the workpiece W with the processing light EL including the plurality of pulsed lights. For example, the processing system SYSb may irradiate the workpiece W with the processing light EL including the plurality of pulsed lights the ON time of each of which is equal to or shorter than nano seconds.

### (3) Processing System SYS in Third Example Embodiment

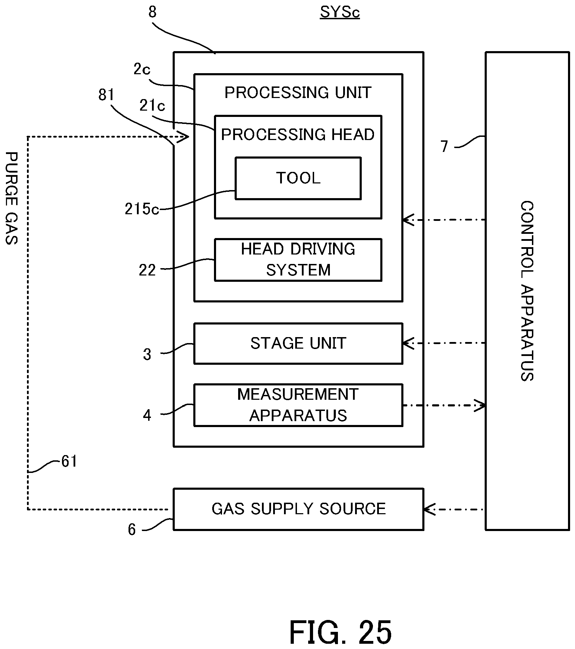

Next, the processing system SYS in a third example embodiment (in the below described description, the processing system SYS in the third example embodiment is referred to as a "processing system SYSc") will be described. The processing system SYSc in the third example embodiment is different from the processing system SYSa in the first example embodiment in that it may process the workpiece W by using a tool 215c (see FIG. 25 described later and FIG. 21) for machining the workpiece W in addition to or instead of the processing light EL. Namely, the processing system SYSc is different from the processing system SYSa in that it may perform a machining processing the workpiece W. For example, the processing system SYSc may perform a cutting processing, a grinding processing, a polishing processing or a cutting-off processing on the workpiece W by making the tool contact with the workpiece W. For example, the processing system SYSb may perform the machining processing on the workpiece W so that the shape of the workpiece W is a desired shape. For example, the processing system SYSb may perform the machining processing on the workpiece W to form a desired structure on the workpiece W. For example, the processing system SYSb may perform the machining processing on the workpiece W to form a desired structure on the surface of the workpiece W. For example, the processing system SYSb may perform the machining processing on the workpiece W so that the surface of the workpiece W is polished.

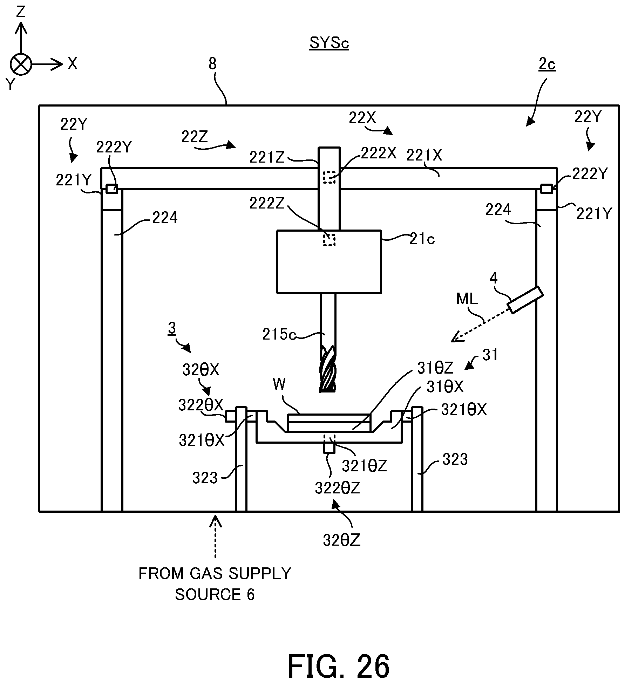

FIG. 25 and FIG. 26 illustrates the processing system SYSc. FIG. 25 is a block diagram that illustrates a system configuration of the processing system SYSc. FIG. 26 is a cross-sectional view that illustrates a configuration of the processing system SYSc. As illustrated in FIG. 25 and FIG. 26, the processing system SYSc is different from the processing system SYSa in that it may not include the light source 5. Furthermore, the processing system SYSc is different from the processing system SYSa in that it may not include the irradiation optical system 211. Specifically, the processing system SYSc is different from the processing system SYSa in that it includes a processing unit 2c including a processing head 21c that does not include the irradiation optical system 211 instead of the processing unit 2 including the processing head 21 that includes the irradiation optical system 211. Namely, the processing system SYSc is different from the processing system SYSa in that it may not include a component for irradiating the workpiece W with the processing light EL. Furthermore, the processing system SYSc is different from the processing system SYSa in that it may not include the component for supplying the build materials M. Furthermore, the processing system SYSc is different from the processing system SYSa in that it includes the processing head 21c that includes the tool 215c instead of the processing head 21. Another feature of the processing system SYSc may be same as another feature of the processing system SYSa.

The above described processing system SYSc may also move at least one of the processing head 21c and the stage 31 based on the results of the coordinate matching operation and the eccentric amount obtaining operation in processing (namely, performing the removal processing on) the workpiece W. For example, the processing system SYSb may rotate the stage 31 and move the processing head 21 (furthermore, the stage 31) based on the result of the eccentric amount obtaining operation in while making the tool 215c contact with the workpiece W. As a result, the processing system SYSc is capable of achieving an effect that is same as the effect achievable by the processing system SYSa.

### (4) Processing System SYS in Fourth Example Embodiment

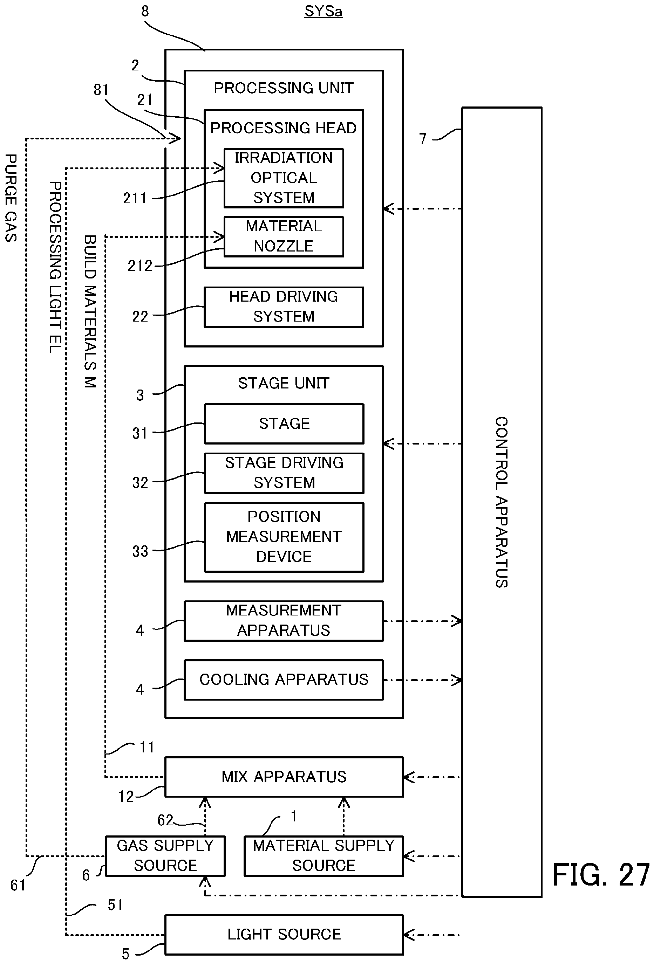

Next, with reference to FIG. 27, the processing system SYS in a fourth example embodiment (in the below described description, the processing system SYS in the fourth example embodiment is referred to as a "processing system SYSd") will be described. FIG. 27 is a block diagram that illustrates a system configuration of the processing system SYSd.

As illustrated in FIG. 27, the processing system SYSd in the fourth example embodiment is different from the processing system SYSa in that it includes a cooling apparatus 9d. Another feature of the processing system SYSd may be same as another feature of the processing system SYSa.

The cooling apparatus 9d is an apparatus that is configured to cool the stage 31 (the stage 31θZ in the fourth example embodiment) on which the workpiece W is placed. Specifically, the workpiece W placed on the stage 31θZ is irradiated with the processing light EL. When the workpiece W is irradiated with the processing light EL, a heat is transferred from the processing light to the workpiece W. When the heat is transferred to the workpiece W, a heat is transferred from the workpiece W to the stage 31θZ on which the workpiece W is placed. As a result, there is a possibility that a temperature of the stage 31θZ is relatively high. The cooling apparatus 9d cools the stage 31θZ the temperature of which may be possibility relatively high. Incidentally, since the stage 31θZ is contained in the inner space of housing 8, the cooling apparatus 9d is also contained in the inner space of the housing 8.

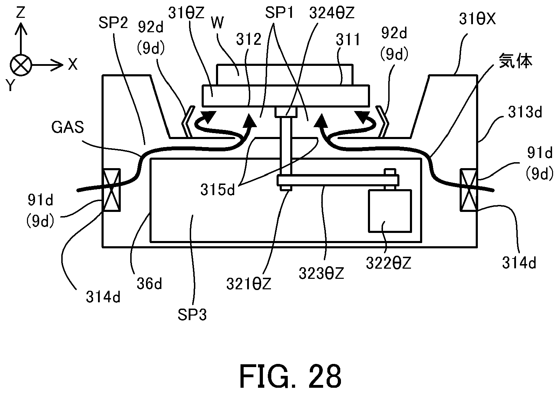

The cooling apparatus 9d may an air-cooled type of cooling apparatus. For example, the cooling apparatus 9d may cool the stage 31θZ by supplying a gas to the stage 31θZ. Namely, the cooling apparatus 9d may cool the stage 31θZ by supplying the gas to a space facing the stage 31θZ. The cooling apparatus 9d may cool the stage 31θZ by forming a flow of the gas in the space facing the stage 31θZ. Next, with reference to FIG. 28, one example of the cooling apparatus 9d that cools the stage 31θZ by supplying the gas to the space facing the stage 31θZ will be described. FIG. 28 is a cross-sectional view that illustrates one example of a configuration of the cooling apparatus 9d.

As illustrated in FIG. 28, the cooling apparatus 9d may cool the stage 31θZ by supplying the gas to a lower surface 312 (namely, a surface opposite to an upper surface 311) of the stage 31θZ having the upper surface 311 on which the workpiece W is placed. Namely, the cooling apparatus 9d may cool the stage 31θZ by supplying the gas to a space SP1 facing the lower surface 312 of the stage 31θZ. The lower surface 312 of the stage 31θZ facing the stage 31θX. Thus, the space SP1 may include at least a part of a space between the lower surface 312 of the stage 31θZ and the stage 31θX. However, the cooling apparatus 9d may cool the stage 31θZ by supplying the gas to a space facing a surface that is different from the lower surface 312 of the stage 31θZ.

The cooling apparatus 9d may supply the gas to the space SP1 from below the stage 31θZ. When the gas is supplied from below the stage 31θZ to the space SP1 facing the lower surface 312 of the stage 31θZ, there is a low possibility that the flow of the gas is formed in a space facing the upper surface 311 of the stage 31θZ (namely, a space facing the workpiece W). Thus, the build materials M supplied to the workpiece W placed on the upper surface 311 is less likely to be blown away by the gas for cooling the stage 31θZ. Therefore, the material nozzle 212 is capable of supplying the build materials M to the workpiece W without being affected by the gas for colling the stage 31θZ.

Since the lower surface of the stage 31θZ faces the stage 31θX, the cooling apparatus 9d may supply the gas to the space SP1 through an inside of the stage 31θX. The cooling apparatus 9d may supply the gas to the space SP1 through a supply path that is formed in the inside of the stage 31θX. Specifically, as illustrated in FIG. 28, a supply path (in other words, a supply space) SP2 for supplying the gas to the space SP1 may be formed in an inside of a housing 313d of the stage 31θX. The supply path SP2 is connected to an aperture 314d formed at the housing 313d to take the gas from an outside of the housing 313d to the inside of the housing 313d (especially, the supply path SP2). In this case, the cooling apparatus 9d may include a fan 91d disposed at the aperture 314d. The fan 91d is configured to be driven to take the gas from the outside of the housing 313d to the inside of the housing 313d (especially, the supply path SP2). Furthermore, the supply path SP2 is connected to an aperture 315d formed at the housing 313d to supply the gas from the supply path SP2 in the inside of the housing 313d to the space SP1 at the outside of the housing 313d. The aperture 315d is formed at a part (for example, a part located below the stage 31θZ) of the housing 8 facing the space SP1. In this case, the cooling apparatus 9d takes the gas from the outside of the housing 313d to the supply path SP2 through the fan 91d disposed at the aperture 314d, and supplies the taken gas to the space SP1 through the supply path SP2 and the aperture 315d. As a result, the flow of the gas is formed in the space SP1 and stage 31θZ is cooled by the flow of the gas. Note that the gas supplied to the space SP1 in this case may include at least a part of the purge gas supplied from the gas supply source 6 to an inside of the housing 8.

A containing space SP3 in which the motor 322θZ, which is configured to serve as a rotation mechanism (a movement mechanism) for rotating the stage 31θZ, may be formed in the housing 313 of the stage 31θX. A force generated by the motor 322θZ is transmitted to the stage 31θZ through the rotational shaft 321θZ, which is a force transmission mechanism (a movement mechanism) connected to the stage 31θZ, and a belt 323θZ, which is a force transmission mechanism (a movement mechanism) connecting a rotational axis of the motor 322θZ to the rotational shaft 321θZ. In this case, at least a part of the rotational shaft 321θZ and the belt 323θZ may be contained in the containing space SP3. The containing space SP3 may be spatially separated from the supply path SP2 by a wall member 36d. When the containing space SP3 is spatially separated from the supply path SP2 by the wall member 36d, it is prevented that the build materials M enter the containing space SP3 (as a result, the motor 322θZ and so on is contaminated by the build materials M). Note that the rotational axis of the motor 322θZ may be directly connected to the rotational shaft 321θZ.

The stage 31θX may be connected to the rotational shaft 321θX through a reducer 324d. For example, the reducer 324 may connect a lower surface of the stage 31θX to the rotational shaft 321θX. In this case, there is a possibility that the reducer 324d generates a heat. The reducer 324d may also be cooled by the flow of the gas for cooling the stage 31θZ.

The cooling apparatus 9d may include a wind guide member 92d. the wind guide member 92d may be configured to return the gas, which flows from the space SP1 to the outside of the space SP1, to the space SP1. As a result, an efficiency of cooling the stage 31θZ is higher, compared to a case where the cooling apparatus 9d does not include the wind guide member 92d.

As described above, the processing system SYSd is capable of cooling the stage 31 (for example, the stage 31θZ) on which the workpiece W is placed while achieving an effect that is same as the effect achievable by the processing system SYSa.

Note that at least one of the processing system SYSb in the second example embodiment and the processing system SYSc in the third example embodiment may include the cooling apparatus 9d.

### (5) Modified Example

Next, a modified example of the processing system SYS will be described.

### (5-1) Modified Example of Calibration Plate 34

In the above described description, the thermosensitive film 343 formed on the calibration plate 34 is transparent to the measurement light ML of the measurement apparatus 4. However, at least a part of the thermosensitive film 343 may be opaque to the measurement light ML of the measurement apparatus 4.

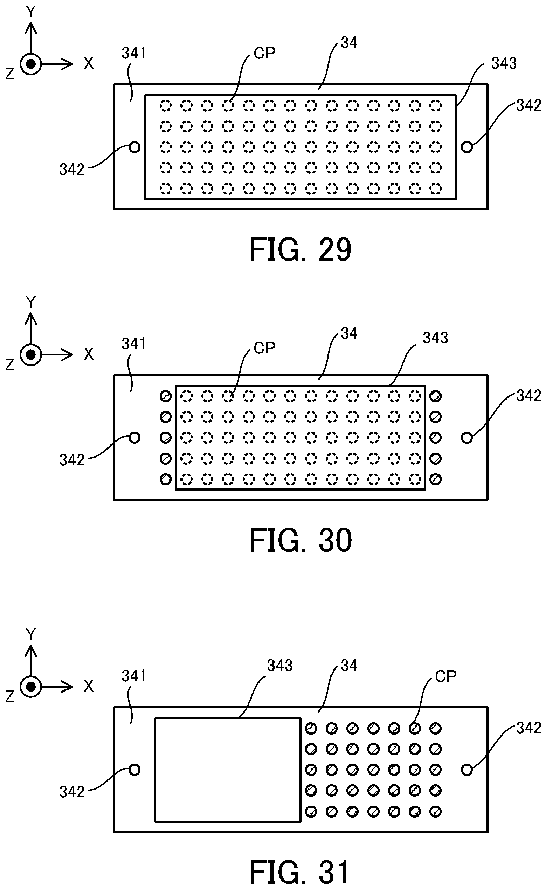

When the thermosensitive film 343 is opaque, the thermosensitive film 343 may cover whole of the calibration pattern CP as illustrated in FIG. 29 that is a planar view illustrating one example of the calibration plate 34. In this case, in an above described calibration operation, the processing system SYS may irradiate the thermosensitive film 343 with the processing light EL (the step S12 in FIG. 6), then, measure the exposed pattern PP by measuring the calibration plate 34 on which the thermosensitive film 343 is formed (the step S13 in FIG. 6), then, measure the calibration pattern CP by measuring the calibration plate 34 from which the thermosensitive film 343 is removed after the thermosensitive film 343 is removed (the step S13 in FIG. 6), and then, associate the processing coordinate system with the stage coordinate system by merging the measured result of the exposed pattern PP and the measured result of the calibration pattern CP.

Alternatively, the thermosensitive film 343 may cover a part of the calibration pattern CP as illustrated in FIG. 30 that is a planar view illustrating one example of the calibration plate 34. Namely, another part of the calibration pattern CP may not be covered with the thermosensitive film 343. In this case, in the above described calibration operation, the processing system SYS may irradiate the thermosensitive film 343 with the processing light EL (the step S12 in FIG. 6), then, measure the exposed pattern PP and a part of the calibration pattern CP by measuring the calibration plate 34 on which the thermosensitive film 343 is formed (the step S13 in FIG. 6), then, measure the calibration pattern CP by measuring the calibration plate 34 from which the thermosensitive film 343 is removed after the thermosensitive film 343 is removed (the step S13 in FIG. 6), and then, associate the processing coordinate system with the stage coordinate system by merging the measured result of the exposed pattern PP and the measured result of the calibration pattern CP. In this case, the processing system SYS is capable of merging the measured result of the exposed pattern PP and the measured result of the calibration pattern CP with relatively high accuracy by using a measured result of a part of the calibration pattern CP that is included in both of the measured result of the exposed pattern PP and the measured result of the calibration pattern CP (namely, a part of the calibration pattern CP that is not covered with the thermosensitive film 343). Incidentally, even when the thermosensitive film 343 is transparent, the thermosensitive film 343 may cover a part of the calibration pattern CP and may not cover another part of the calibration pattern CP.

Alternatively, the thermosensitive film 343 may not cover the calibration pattern CP as illustrated in FIG. 31 that is a planar view illustrating one example of the calibration plate 34. Namely, the thermosensitive film 343 may be formed on a first part of the base member 341 and the calibration pattern CP may be formed on a second part of the base member 341. Incidentally, even when the thermosensitive film 343 is transparent, the thermosensitive film 343 may not cover the calibration pattern CP.

### (5-2) Modified Example of Calibration Pattern CP

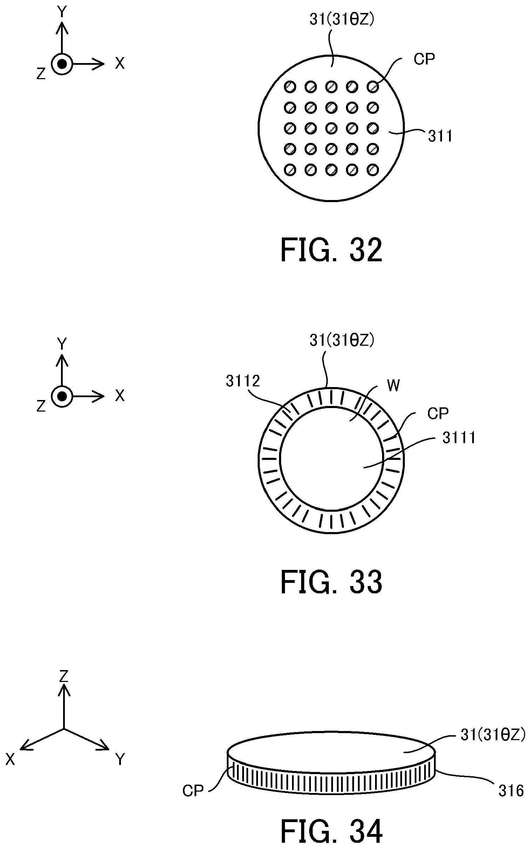

In the above described description, the calibration pattern CP is formed on the calibration plate 34. However, the calibration pattern CP may be formed on a member that is different from the calibration plate 34. For example, the calibration pattern CP may be formed on a member (for example, a fiducial member) that is placed on the stage 31 and that is different from the workpiece W. For example, as illustrated in FIG. 32 to FIG. 34, the calibration pattern CP may be formed on the stage 31. FIG. 32 to FIG. 34 illustrate an example in which the calibration pattern CP is formed on the stage 31θZ, however, the calibration pattern CP may be formed on the stage 31θX. FIG. 32 illustrates an example in which the calibration pattern CP is formed on the upper surface 311 (namely, a surface on which the workpiece W is placed) of the stage 31θZ. FIG. 33 illustrates an example in which the calibration pattern CP is formed on a surface (for example, an outer surface located at an outside of a holding surface 3111), which is different from the holding surface 3111 that faces the workpiece W to actually hold the workpiece W, of the upper surface 311 of the stage 31θZ. FIG. 34 illustrates an example in which the calibration pattern CP is formed on a side surface 316 of the stage 31θZ.

When the calibration pattern CP is formed on a surface of the stage 31θZ that is different from the holding surface 3111 as illustrated in FIG. 33 and FIG. 34, the processing system SYS is capable of performing each of the coordinate matching operation and the eccentric amount obtaining operation in a state where the workpiece W is placed on the stage 31θZ. Furthermore, when the calibration pattern CP is formed on a surface of the stage 31θZ that is different from the holding surface 3111, the processing system SYS is capable of measuring both of at least a part of the calibration pattern CP and at least a part of the workpiece W at the same time in the eccentric amount obtaining operation. Namely, the processing system SYS is capable of measuring at least a part of the calibration pattern CP of the stage 31 together with at least a part of the workpiece W. Thus, the measurement of the calibration pattern CP by the measurement apparatus 4 to calculate the rotational axis ϕZ of the stage 31θZ and the measurement of the workpiece W by the measurement apparatus 4 to calculate the rotational axis ϕW of the workpiece W may not be performed separately. Thus, a time necessary for the eccentric amount obtaining operation is reducible.

Incidentally, since each of the stages 31θX and 31θZ are rotated, the calibration pattern CP may include a pattern that is configured to determine the position of at least one of the stages 31θX and 31θZ. For example, as illustrated in FIG. 33 and FIG. 34, the calibration pattern CP may include an encoder pattern (for example, a grid pattern). The encoder pattern may be an absolute pattern.

Incidentally, when the calibration pattern CP is formed on the stage 31, the measurement apparatus 4 may measure the calibration pattern CP on the stage 31 in a state where the workpiece W is placed on the stage 31.

An existing structural object formed at the stage 31 may be used as at least a part of the calibration pattern CP in addition to or instead of the dedicated calibration pattern CP. For example, a concave part (for example, an aperture such as a screw hole) formed at the stage 31 may be used as at least a part of the calibration pattern CP. For example, a convex part (for example, a protruding object) formed at the stage 31 may be used as at least a part of the calibration pattern CP. In this case, the measurement apparatus 4 may measure the existing structural object used as at least a part of the calibration pattern CP in a state where the workpiece W is placed on the stage 31.

### (5-3) Other Modified Example

In the above described description, the processing system SYS obtains (namely, calculates) the rotational axis ϕZ by measuring the calibration pattern CP. However, the processing system SYS may obtain a rotational axis ϕ by measuring at least a part of the calibration pattern CP.

In the above described description, the processing system SYS obtains the rotational axis ϕZ (ϕX) by measuring the calibration pattern CP. However, the processing system SYS may obtain the rotational axis ϕZ by measuring at least a part of the stage 31 (the stage 31θZ). For example, the processing system SYS may perform a coordinate matching between a measured result of a three-dimensional shape of the stage 31 (the stage 31θZ) and a designed model of the stage 31 (the stage 31θZ) that is prepared in advance in a measurement coordinate system and may set a rotational axis of the designed model in the measurement coordinate system to be the rotational axis (for example, the rotational axis ϕZ) that should be obtained.

In the above described description, the processing system SYS obtains the rotational axis ϕZ (ϕX). However, the processing system SYS may not obtain the rotational axis ϕZ (ϕX). For example, the processing system SYS may measure three-dimensional shapes of at least a part of the stage 31 and at least a part of the workpiece W in a state where the workpiece W is placed on the stage 31, and perform a matching of a measured point cloud information of the stage 31 and the measured point cloud information of the workpiece W with respect to the designed model of the stage 31 and a model of the workpiece W in a virtual coordinate system. Then, the processing system SYS may calculate the displacement of the workpiece W due to the rotation of the stage 31 in the virtual coordinate system and control the movement of the processing head 21 by using a calculated result.

In the above described description, the workpiece W has a cylindrical shape, however, the shape of the workpiece W is not limited to a rotationally symmetric shape such as the cylindrical shape.

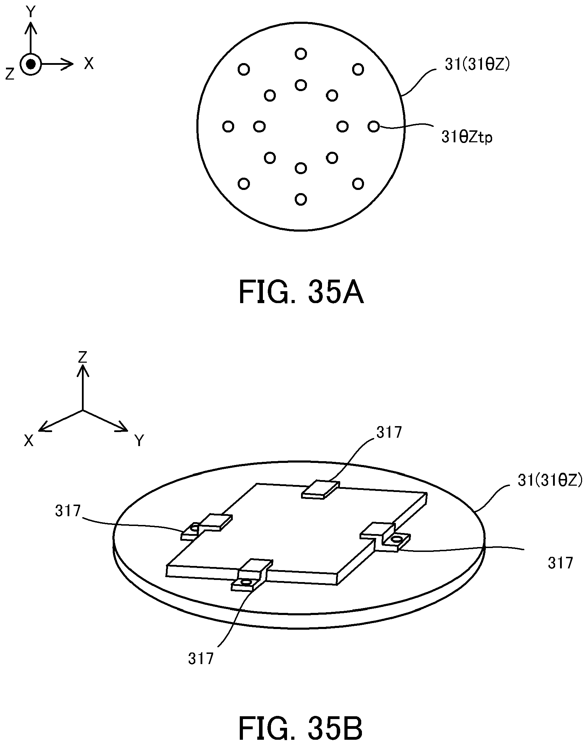

Incidentally, although a detailed description of a holding method by the stage 31θZ is omitted in the above described description, the workpiece W may be fixed to a screw hole 31θZtp (see FIG. 35A) formed at the stage 31θZ through one or more holding clasp 317 as illustrated in FIG. 35A and FIG. 35B.

In the above described description, the processing system SYS processes the workpiece W by irradiating the workpiece W with the processing light EL. However, the processing system SYS may process the workpiece W by irradiating the workpiece W with any energy beam. In this case, the processing system SYS may include a beam irradiation apparatus that is configured to emit any energy beam in addition to or instead of the light source 5 and the irradiation optical system 211. At least one of a charged particle beam, an electromagnetic wave and the like is one example of any energy beam. A least one of an electron beam, an ion beam and the like is one example of the charged particle beam.

### (6) Supplementary Note

With respect to the example embodiments described above, the following Supplementary Notes will be further disclosed.

### [Supplementary Note 1]

A processing system that is configured to process an object by using an energy beam, wherein
the processing system includes:
a holding part that is configured to hold each of the object and a measurement member on which a sensitive film having a sensitivity to the energy beam;
an irradiation apparatus that is configured to irradiate each of the object and the measurement member with the energy beam;
a position change apparatus that is configured to change a relative positional relationship between the irradiation apparatus and the holding part;
a measurement apparatus that is configured to measure at least a part of the measurement member; and
a control apparatus that is configured to control the position change apparatus,
in at least a part of a first period during which the holding part holds the measurement member, the position change apparatus changes the relative positional relationship between the irradiation apparatus and the holding part and the irradiation apparatus irradiates at least a part of the sensitive film of the measurement member with the energy beam,
in at least a part of a second period during which the holding part holds the object, the control apparatus controls the position change apparatus based on a measured result of the measurement member that is irradiated with the energy beam.

### [Supplementary Note 2]

The processing system according to the Supplementary Note 1, wherein
the measured result of the measurement member that is irradiated with the energy beam includes a measured result of a part of the sensitive film that reacts to the energy beam.

### [Supplementary Note 3]

The processing system according to the Supplementary Note 1 or 2, wherein
a predetermined measurement pattern is formed on the measurement member,
the sensitive film is transparent to a measurement light that is used by the measurement apparatus to measure the measurement member and is formed to cover at least a part of the measurement pattern.

### [Supplementary Note 4]

The processing system according to any one of the Supplementary Notes 1 to 3, wherein
a predetermined measurement pattern is formed on the measurement member,
the sensitive film is opaque to a measurement light that is used by the measurement apparatus to measure the measurement member and is formed to cover at least a part of the measurement pattern,
in at least a part of the first period, the measurement apparatus measures the sensitive member that is irradiated with the energy beam and then measures the measurement member from which the sensitive film is removed.

### [Supplementary Note 5]

The processing system according to any one of the Supplementary Notes 1 to 4, wherein
in at least a part of the second period, the control apparatus controls the position change apparatus so that the irradiation apparatus irradiates a desired position on the object with the energy beam.

### [Supplementary Note 6]

A measurement apparatus that is configured to measure an object that is placed on a rotation apparatus configured to rotate a placed object, wherein
the measurement apparatus includes:
a measurement part that is configured to obtain a first measured result of the object on the rotation apparatus and a second measured result in measuring the object having an attitude that is different from a rotational attitude of the object when the first measured result is obtained; and
a relationship obtaining part that is configured to obtain a relationship between the object and a rotational axis of the rotation apparatus based on the first and second measured results.

### [Supplementary Note 7]

A measurement apparatus that is configured to measure an object that is placed on a rotation apparatus configured to rotate a placed object, wherein
the measurement apparatus includes:
a measurement part that is configured to obtain a first measured result of the object on the rotation apparatus and a second measured result in measuring the object having an attitude that is different from a rotational attitude of the object when the first measured result is obtained; and
a difference obtaining part that is configured to obtain, based on the first and second measured results, a translational movement component, in which a rotational movement component is removed, of a movement component of one point of the object when the object is rotated.

### [Supplementary Note 8]

An arithmetic apparatus that is connected to a measurement apparatus configured to measure an object that is placed on a rotation apparatus configured to rotate a placed object, wherein
the arithmetic apparatus includes:
a measurement part that is configured to obtain a first measured result of the object on the rotation apparatus and a second measured result in measuring the object having an attitude that is different from a rotational attitude of the object when the first measured result is obtained; and
a relationship obtaining part that is configured to obtain a relationship between the object and a rotational axis of the rotation apparatus based on the first and second measured results.

### [Supplementary Note 9]

An arithmetic apparatus that is connected to a measurement apparatus configured to measure an object that is placed on a rotation apparatus configured to rotate a placed object, wherein
the arithmetic apparatus includes:
a measurement part that is configured to obtain a first measured result of the object on the rotation apparatus and a second measured result in measuring the object having an attitude that is different from a rotational attitude of the object when the first measured result is obtained; and
a difference obtaining part that is configured to obtain, based on the first and second measured results, a translational movement component, in which a rotational movement component is removed, of a movement component of one point of the object when the object is rotated.
   relationship between the object and a rotational axis of the rotation apparatus based on the first and second measured results.

### [Supplementary Note 10]

A processing system that is configured to process an object, wherein
the processing system includes:
a processing apparatus that is configured to process the object;
a rotation apparatus that is configured to rotate a holding part that holds the object;
a measurement apparatus that is configured to measure at least a part of the object held by the holding part; and
a control apparatus that is configured to control the rotation apparatus and the measurement apparatus to rotate the holding part after measuring the object and to measure the object after the rotating the holding part.

### [Supplementary Note 11]

The processing system according to the Supplementary Note 10, wherein
the control apparatus obtains a position information of the object held by the holding part based on a first measured result obtained by measuring the object before rotating the holding part and a second measured result obtained by measuring the object after rotating the holding part.

### [Supplementary Note 12]

The processing system according to the Supplementary Note 11, wherein
the processing apparatus processes the object based on the position information of the object obtained by the control apparatus.

### [Supplementary Note 13]

The processing system according to the Supplementary Note 11 or 12, wherein
the control apparatus controls the rotation apparatus and the measurement apparatus to obtain the second measured result by rotating the object by a rotational angle smaller than 360 degree and measuring the object after the first measured result is obtained.

### [Supplementary Note 14]

The processing system according to any one of the Supplementary Notes 11 to 13 further including an angle change apparatus that is configured to change an angle between a rotational axis of the rotation apparatus and a measurement axis of the measurement apparatus.

At least a part of the features of each example embodiment described above may be appropriately combined with at least another part of the features of each example embodiment described above. Apart of the features of each example embodiment described above may not be used. Moreover, the disclosures of all publications and United States patents that are cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a processing system, which involve such changes, are also intended to be within the technical scope of the present invention.

### Description of Reference Codes

- 2: processing unit
- 21: processing head
- 22: head driving system
- 3: stage unit
- 31, 31θX, 31θZ: stage
- 32: stage driving system
- 34: calibration plate
- 343: thermosensitive film
- 4: measurement apparatus
- 7: control apparatus
- 9d: cooling apparatus
- 91d: fan
- 92d: wind guide member
- W: workpiece
- EL: processing light
- CP: calibration pattern
- CM: calibration marker

## Claims

1. A processing system that is configured to process an object, wherein
the processing system comprises:
a processing apparatus that is configured to process the object;
a rotation apparatus that is configured to rotate a holding part that holds the object;
a movement apparatus that is configured to move at least one of the processing apparatus and the holding part;
a measurement apparatus that is configured to measure at least a part of the object held by the holding part; and
a control apparatus that is configured to control the movement apparatus and the rotation apparatus based on a measured result by the measurement apparatus to rotate the holding part and to move at least one of the processing apparatus and the holding part.

2. The processing system according to claim 1, wherein
the processing system rotates the holding part and moves at least one of the processing apparatus and the object during the processing of the object by the processing apparatus.

3. The processing system according to claim 1 or 2, wherein
the processing system controls the movement apparatus and the rotation apparatus based on the measured result by the measurement apparatus to move at least one of the processing apparatus and the object in parallel with the rotation of the holding part.

4. The processing system according to any one of claims 1 to 3, wherein
the movement apparatus moves at least one of the processing apparatus and the holding part in a plane that is perpendicular to a rotational axis of the rotation apparatus.

5. The processing system according to any one of claims 1 to 4, wherein
a rotational axis of the rotation apparatus is inclined with respect to a moving direction by the movement apparatus.

6. The processing system according to any one of claims 1 to 5, wherein
a rotational axis of the rotation apparatus is inclined with respect to a moving direction by the movement apparatus,
the movement apparatus moves up and down at least one of the processing apparatus and the object.

7. The processing system according to any one of claims 1 to 6, wherein
the processing apparatus includes an irradiation apparatus, and processes the object by irradiating the object with an energy beam from the irradiation apparatus.

8. The processing system according to claim 7, wherein
the movement apparatus moves the processing apparatus, and moves an irradiation position of the energy beam by the movement of the processing apparatus.

9. The processing system according to claim 7 or 8, wherein
the movement of the processing apparatus includes moving at least one optical member of the irradiation apparatus.

10. The processing system according to any one of claims 7 to 9, wherein
the processing apparatus includes a material supply apparatus that is configured to supply a material to an irradiation position of the energy beam.

11. The processing system according to any one of claims 7 to 10, wherein
the processing apparatus removes a part of the object by irradiating the object with the energy beam.

12. The processing system according to any one of claims 1 to 11, wherein
the processing apparatus machines the object.

13. The processing system according to claim 12, wherein
the processing apparatus includes a tool for machining the object,
the movement apparatus moves the tool.

14. The processing system according to any one of claims 1 to 13, wherein
the measurement apparatus measures a position of the object.

15. The processing system according to any one of claims 1 to 14, wherein
the control apparatus generates a positional relationship information related to a positional relationship between a rotational axis of the rotation apparatus and the object based on the measured result.

16. The processing system according to claim 15, wherein
the control apparatus generates an object position information related to a position of the object based on the measured result and generates the positional relationship information based on the object position information.

17. The processing system according to claim 16, wherein
the control apparatus generates the object position information by using the measured result and a design information of the object.

18. The processing system according to any one of claims 1 to 17, wherein
the holding part includes a stage on which the object is placed and which is rotated by the rotation apparatus.

19. The processing system according to any one of claims 1 to 18, wherein
the measurement apparatus measures at least a part of the holding part as well as the obj ect.

20. The processing system according to any one of claims 1 to 19, wherein
the measurement apparatus includes a three-dimensional measurement device that is configured to three-dimensionally measure the object.

21. A processing system that is configured to process an object, wherein
the processing system comprises:
a processing apparatus that is configured to process the object by irradiating the object with an energy beam;
a movement apparatus that is configured to move at least one of an irradiation position of the energy beam and the object;
a rotation apparatus that is configured to rotate a holding part that holds the object;
a measurement apparatus that is configured to measure at least a part of the object; and
a control apparatus that is configured to control the movement apparatus and the rotation apparatus based on a measured result by the measurement apparatus to rotate the object and to move at least one of the irradiation position and the object.

22. The processing system according to claim 21, wherein
the movement apparatus moves the processing apparatus.

23. A processing system that is configured to process an object, wherein
the processing system comprises:
a processing apparatus that is configured to process the object;
a rotation apparatus that is configured to rotate a holding part that holds the object;
a movement apparatus that is configured to move at least one of the processing apparatus and the holding part;
a measurement apparatus that is configured to measure at least a part of the object held by the holding part; and
a control apparatus that is configured to obtain a relationship between the object held by the holding part and a rotational axis of the rotation apparatus based on a measured result by the measurement apparatus.

24. The processing system according to any one of claims 1 to 23, wherein
the measurement apparatus measures the object a plurality of times from different directions.

25. The processing system according to any one of claims 1 to 24, wherein
the rotation apparatus rotates the holding part in at least a part of a period during which the measurement apparatus measures at least a part of the object.

26. The processing system according to any one of claims 23 to 25, wherein
the measurement apparatus measures at least a part of the object each time the rotation apparatus rotates the holding part.

27. The processing system according to any one of claims 23 to 26, wherein
the rotation apparatus includes an angle detection part that is configured to detect a rotational angle of the holding part,
the control apparatus controls the movement apparatus and the rotation apparatus based on an output from the angle detection part and the measured result.

28. The processing system according to any one of claims 1 to 27, wherein
the measurement apparatus measures at least a part of the holding part.

29. The processing system according to claim 28, wherein
the measurement apparatus measures a position of at least a part of the holding part.

30. The processing system according to claim 28 or 29, wherein
the holding part holds a measurement member on which a predetermined measurement pattern is formed,
the measurement apparatus measures at least a part of the holding part by measuring at least a part of the measurement member.

31. The processing system according to any one of claims 28 to 30, wherein
a predetermined measurement pattern is formed on the holding part.

32. The processing system according to claim 31, wherein
the holding part includes: a holding surface that holds the object; and another surface that is different from the holding surface,
the measurement pattern is formed on the another surface.

33. The processing system according to any one of claims 28 to 32, wherein
the rotation apparatus rotates the holding part in at least a part of a period during which the measurement apparatus measures at least a part of the holding part.

34. The processing system according to any one of claims 28 to 33, wherein
the measurement apparatus measures at least a part of the holding part each time the rotation apparatus rotates the holding part.

35. The processing system according to any one of claims 28 to 34, wherein
the control apparatus generates a member position information related to a position of the holding part based on a measured result of the holding part by the measurement apparatus and generates a positional relationship information related to a relationship between the object held by the holding part and a rotational axis of the rotation apparatus based on the member position information.

36. The processing system according to claim 35, wherein
the member position information includes an information related to a position of the rotational axis of the rotation apparatus that is a rotational center of the holding part.

37. The processing system according to any one of claims 1 to 36, wherein
the measurement apparatus includes a 3D scanner.

38. The processing system according to any one of claims 1 to 37, wherein
the holding part includes: a first surface on which the object is placed; and a second surface that is different from the first surface,
the processing system further comprises a cooling apparatus that is configured to cool the second surface.

39. A processing system that is configured to process an object, wherein
the processing system comprises:
a processing apparatus that is configured to process the object;
a holding part that includes: a first surface on which the object is placed; and a second surface that is different from the first surface; and
a cooling apparatus that is configured to cool the second surface.

40. The processing system according to claim 38 or 39, wherein
the cooling apparatus includes a gas supply apparatus that is configured to supply a gas to a space facing the second surface.

41. A processing system that is configured to process an object, wherein
the processing system comprises:
a processing apparatus that is configured to process the object;
a holding part that includes: a first surface on which the object is placed; and a second surface that is different from the first surface; and
a gas supply apparatus that is configured to supply a gas to a space facing the second surface.

42. The processing system according to claim 40 or 41, wherein
the gas supply apparatus cools the second surface by supplying the gas to the space.

43. The processing system according to any one of claims 40 to 42 further comprising a movement apparatus that is configured to move the holding part,
the gas supply apparatus supplies the gas to the space through a supply path formed in an inside of the movement apparatus.

44. The processing system according to claim 43, wherein
the gas supply apparatus supplies the gas, which is taken into the inside of the movement apparatus from an outside of the movement apparatus, to the space through the supply path .

45. The processing system according to claim 43 or 44, wherein
the movement apparatus includes:
a movement mechanism that is configured to move the holding part;
a containing member in which the supply path and a containing part containing the movement mechanism are formed; and
a wall member that separates the containing part from the supply path.

46. The processing system according to any one of claims 40 to 45 further comprising a wind guide member that returns a gas, which flows from the space to an outside of the space, to the space.

47. The processing system according to any one of claims 38 to 46, wherein
the second surface includes a surface opposite to the first surface.
